# EUROPÄISCHE PATENTSCHRIFT

(11) **EP 4 163 029 B1**
(45) Veröffentlichungstag und Bekanntmachung des Hinweises auf die Patenterteilung: **04.12.2024**
(21) Anmeldenummer: 22199890.9
(22) Anmeldetag: 05.10.2022
(51) Int. Cl.: B21F 39/00, B21K 1/76, B60B 1/02

(54) **SPEICHE UND VERFAHREN ZUR HERSTELLUNG EINER SPEICHE**
SPOKE AND METHOD FOR MANUFACTURING A SPOKE
RAYON ET PROCÉDÉ DE FABRICATION D'UN RAYON

(30) Priorität: 06.10.2021 DE 102021125903
(43) Veröffentlichungstag der Anmeldung: 12.04.2023
(73) Patentinhaber: DT Swiss AG, 2504 Biel (CH)
(72) Erfinder: Spahr, Stefan, 2543 Lengnau (CH); Hugentobler, Simon, 3097 Liebefeld (CH); Scheidegger, Adrian, 3097 Liebefeld (CH)
(74) Vertreter: BSB Patentanwälte Schütte & Engelen Partnerschaft mbB

(56) Entgegenhaltungen:
- EP-A1- 3 312 021
- EP-A2- 3 064 370
- EP-B1- 1 559 583
- EP-B1- 3 135 396
- DE-A1- 102015 114 051
- DE-A1- 102017 103 312
- DE-U1- 202015 101 124
- DE-U1- 29 811 076

## Beschreibung

Die vorliegende Erfindung betrifft ein Verfahren zur Herstellung einer Speiche für ein Laufrad eines wenigstens teilweise muskelbetriebenen Fahrrades sowie eine Speiche.

Für die Belastbarkeit und Haltbarkeit von Laufrädern für Fahrräder spielen die Speichen eine entscheidende Rolle. Da die Speichen üblicherweise nur Zugkräfte zwischen der Felge und der Nabe übertragen, müssen Sie mit einer entsprechend hohen Vorspannung eingebaut werden. Diese Vorspannung muss in der Regel so hoch sein, dass sie trotz der Gewichtsbelastung und der beim Fahren auftretenden Stöße sowie dem beim Beschleunigen und Bremsen eingeleiteten Drehmoment aufrechterhalten wird. Daher müssen Speichen von hochwertigen Laufrädern sehr hohe Anforderungen an Zugfestigkeit und Bruchfestigkeit erfüllen.

Da die Speichen einen Teil der rotierenden Masse darstellen, wirkt sich eine Gewichtsreduzierung der Speichen stark auf die Fahreigenschaften des gesamten Fahrrades aus. Allerdings stehen die zuvor beschriebenen Anforderungen an Zugfestigkeit und Bruchfestigkeit oft dem Leichtbau entgegen.

Zur Gewichtsreduzierung sind sogenannte Doppeldickend-Speichen bekannt geworden. Dabei handelt es sich um zylindrische Speichen, welche in einem lang gestreckten zentralen Bereich einen reduzierten Durchmesser aufweisen. Dadurch kann das Gewicht reduziert werden, während an den Enden noch ausreichend Durchmesser zum sicheren Befestigen der Speicher an der Felge bzw. an der Nabe bereitsteht. Die Übergänge zwischen den unterschiedlichen Durchmessern werden in der Regel kegelförmig (auch konisch genannt) ausgeführt.

Ein Verfahren zur Herstellung solcher Speichen ist aus der EP 3 135 396 B1 bekannt. Neben der Einsparung von Gewicht haben solche Speichen den Vorteil, dass durch das Schmieden auch die Materialeigenschaften und somit die Belastbarkeit der Speiche insgesamt erheblich verbessert werden.

Zudem sind aus der EP 1 569 809 B1 Speichen bekannt, welche einen lang gestreckten Mittelteil aus Aluminium aufweisen, in den Endstücke aus Stahl eingeschraubt werden. Mit Stahl können die an den Enden auftretenden Belastungen besser als mit Aluminium abgefangen werden. Der Mittelteil kann aufgrund des Aluminiums unaufwendig mit komplexeren Querschnittsformen ausgestattet werden.

Zudem sind besonders leichtgewichtige Laufräder bekannt, bei denen die Speichen aus Faserverbundwerkstoffen gefertigt sind.

Des Weiteren haben die Speichen einen großen Einfluss auf den Luftwiderstand des Laufrads. Daher sind z. B. aus der DE 29 811 076 U1 oder der EP 1 559 583 B1 sogenannte Messerspeichen bekannt geworden, die einen in Laufrichtung flachen Querschnitt aufweisen und somit zur Verringerung des Windwiderstandes beitragen.

Nachteilig an solchen Messerspeichen ist aber, dass diese wiederum die Seitenwindempfindlichkeit erheblich vergrößern, sodass sich damit ausgerüstete Fahrräder unter Windeinfluss schlechter lenken lassen. Daher sind mit der US 10 029 511 B2 Speichen bekannt geworden, welche in einem radial äußeren Bereich einen Querschnitt mit einer Tragflächengeometrie aufweisen.

Aus der DE 10 2017 103 312 A1 sind spindelförmige Speichen bekannt, welche mittels Formwerkzeugen aus einem runden Drahtwerkstoff gefertigt werden. Die durch das Formen an den Längsseiten entstandenen Grate werden durch Druckwalzen entfernt. Als vorteilhaft haben sich Speichen erwiesen, welche zunächst in der Art einer Doppeldickend-Speiche gefertigt werden und anschließend noch eine zweite Umformung zur Erzeugung einer aerodynamischen Geometrie erfahren. Eine solche Speiche ist z. B. aus der EP 3 064 370 A3 bekannt. Allerdings hat sich gezeigt, dass durch das zweite Umformen zwar die aerodynamischen Eigenschaften verbessert werden können, sich die Festigkeitseigenschaften der Speiche aber insgesamt nicht unbedingt verbessern oder in einigen Fällen sogar verschlechtern können.

Ein gattungsgemäßes Verfahren ist aus der DE 10 2015 114 051 A1 bekannt. Eine gattungsgemäße Speiche ist aus der EP 3 312 021 A1 bekannt.

Es ist daher die Aufgabe der vorliegenden Erfindung, eine demgegenüber verbesserte Möglichkeit zur Optimierung einer Speiche hinsichtlich Gewicht und Luftwiderstand zur Verfügung zu stellen. Dabei sollen aber auch zugleich die Zuverlässigkeit und die Festigkeitseigenschaften der Speiche insgesamt verbessert werden.

Diese Aufgabe wird gelöst durch ein Verfahren mit den Merkmalen des Anspruchs 1 und durch eine Speiche mit den Merkmalen des Anspruchs 15 . Bevorzugte Weiterbildungen sind Gegenstand der Unteransprüche. Weitere Vorteile und Merkmale der vorliegenden Erfindung ergeben sich aus der allgemeinen Beschreibung und aus der Beschreibung des Ausführungsbeispiels.

Das erfindungsgemäße Verfahren dient zur Herstellung einer Speiche für ein Laufrad eines wenigstens teilweise muskelbetriebenen Fahrrades. Die Speiche umfasst einen Speichenkörper, welcher in der bestimmungsgemäßen Einbauposition in einem Laufrad ein nabenseitiges erstes Ende und ein felgenseitiges zweites Ende aufweist bzw. sich dazwischen erstreckt. Der Speichenkörper umfasst wenigstens einen sich zwischen den Enden erstreckenden Zentralabschnitt und wenigstens zwei Übergangsabschnitte. Den Enden ist jeweils ein Endabschnitt zugeordnet. Zwischen dem wenigstens einen Zentralabschnitt und den Endabschnitten ist jeweils wenigstens ein Übergangsabschnitt angeordnet.

Das erfindungsgemäße Verfahren umfasst die nachfolgenden Verfahrensschritte in dieser oder einer anderen sinnvollen Reihenfolge: (Erstes) Umformen und insbesondere Kaltschmieden eines insbesondere zylindrischen Drahtwerkstoffs zu einem Speichenrohling mittels einer Schmiedeeinrichtung. Dabei weist der Speichenrohling eine Vorstufe des Zentralabschnitts und Vorstufen der Endabschnitte und Vorstufen der Übergangsabschnitte auf. Die Vorstufen des Zentralabschnitts und der Endabschnitte werden zylindrisch geschmiedet. Insbesondere wird die Vorstufe des Zentralabschnitts stärker als die Vorstufen der Endabschnitte im Durchmesser reduziert. Die Vorstufe des Zentralabschnitts weist einen geringeren Durchmesser als die Vorstufen der Endabschnitte auf. Die Vorstufen der Übergangsabschnitte werden kegelförmig (bzw. konisch) geschmiedet, sodass sie jeweils einen in Richtung des Zentralabschnitts abnehmenden Durchmesser aufweisen. Die Vorstufen der Übergangsabschnitte werden insbesondere mit jeweils einer Länge gefertigt, welche sich um maximal ein Viertel und bevorzugt maximal Fünftel von einer jeweiligen (vorgesehenen) Länge des Übergangsabschnitts (also derjenige, welcher aus der Vorstufe geformt wird) unterscheidet. Mit anderen Worten, die Längen der Vorstufen der Übergangsabschnitte sind insbesondere jeweils gleich der Länge des jeweiligen Übergangsabschnitts +/- 1/4 und vorzugsweise +/-1/5. Einlegen des Speichenrohlings in ein Formwerkzeug. Das Formwerkzeug bildet eine Negativform des Speichenkörpers wenigstens teilweise ab (insbesondere mittels wenigstens eines Negativformwerkzeugs). Umformen und insbesondere Kaltschmieden des Speichenrohlings mittels dem Formwerkzeug (sodass der Speichenkörper gebildet wird). Mit anderen Worten, durch das (zweite) Umformen wird der Speichenrohling in den Speichenkörper umgewandelt. Insbesondere werden dabei die jeweiligen Vorstufen in die Übergangsabschnitte, Endabschnitte und in den Zentralabschnitt umgeformt. Dabei erhalten wenigstens die Übergangsabschnitte wenigstens abschnittsweise (und vorzugsweise auch wenigstens einer der Endabschnitte wenigstens abschnittsweise) jeweils eine andere Querschnittsgeometrie als ihre Vorstufen. Mit anderen Worten, die zylindrischen bzw. kegelförmigen Querschnittsformen der Vorstufen werden wenigstens teilweise in eine andere, nicht zylindrische bzw. nicht kegelförmige Querschnittsgeometrie umgeformt.

Insbesondere werden die Vorstufen der Übergangsabschnitte mit jeweils einer Länge gefertigt, welche sich um maximal ein Sechstel und vorzugsweise maximal ein Siebtel und besonders bevorzugt maximal ein Achtel von der jeweiligen Länge der Übergangsabschnitte unterscheidet. Insbesondere unterscheidet sich die Länge der Vorstufen der Übergangsabschnitte von der Länge der Übergangsabschnitte um maximal +/- 2 mm und vorzugsweise +/- 1,5 mm und besonders bevorzugt +/- 1 mm.

Die hier beschriebenen maximalen Unterschiede der Längen beziehen sich insbesondere auch auf die Länge der Negativform für die Übergangsabschnitte in dem Formwerkzeug. Insbesondere wird durch die Länge der Übergangsabschnitte in der Negativform die Länge des Übergangsabschnitts des fertigen Speichenkörpers festgelegt. Insbesondere gilt dies auch für die Endabschnitte und insbesondere auch für den Zentralabschnitt. Das Formwerkzeug kann vorzugsweise auch als Negativ-Formwerkzeug (engl. Negative Mold) bezeichnet werden.

Die vorliegende Erfindung bietet viele Vorteile. Einen erheblichen Vorteil bieten die gezielt geformten Vorstufen des Speichenrohlings in Kombination mit ihrer anschließenden Umformung zur Erzeugung der neuen Querschnittsgeometrie. Dabei sind die Vorstufen und die anschließend geformte Querschnittsgeometrie optimal aufeinander abgestimmt. Ein besonderer Vorteil liegt darin, dass die Vorstufen der Übergangsabschnitte mit einer Länge gefertigt werden, welche gezielt an die Länge der fertigen Übergangsabschnitte angepasst ist. Es hat sich gezeigt, dass die Länge der Vorstufen der Übergangsabschnitte für die Festigkeit der späteren Speiche besonders entscheidend ist. Zugleich kann der Speichenrohling dadurch sehr unaufwendig (z. B. mittels Freiform-Schmieden) und dennoch wirkungsvoll an eine bestimmte Negativform des Speichenkörpers im Formwerkzeug angepasst werden.

In Untersuchungen konnte gezeigt werden, dass durch die erfindungsgemäße Abstimmung der Vorstufen der Übergangsabschnitte mit der späteren Umformung vorteilhafte Auswirkungen auf die Zugfestigkeit und besonders auf die Bruchfestigkeit der fertigen Speiche haben. So ist es mit dem erfindungsgemäßen Verfahren besonders gut möglich, den Speichenrohling (auch mittels Freiform-Schmieden bzw. ohne Formwerkzeug mit einer Negativform) so zu schmieden, dass er anschließend in eine aerodynamische Querschnittsgeometrie umgeformt werden kann (mittels eines Formwerkzeugs mit einer Negativform), ohne dass die besonderen Materialeigenschaften des geschmiedeten Speichenrohlings ungünstig beeinflusst werden oder dass diese sogar erheblich verbessert werden.

Es ist besonders bevorzugt und vorteilhaft, dass ein minimaler Durchmesser des Zentralabschnitts geringer ist als ein minimaler Durchmesser der Endabschnitte (nach dem Umformen mit dem Formwerkzeug). Vorteilhaft und bevorzugt ist auch, dass die Übergangsabschnitte jeweils einen in Richtung des Zentralabschnitts abnehmenden minimalen Durchmesser aufweisen. Der Durchmesser kann kontinuierlich oder auch veränderlich abnehmen.

Es hat sich gezeigt, dass durch eine solche Abstimmung der Querschnittsgeometrien von Speichenrohling und fertigem Speichenkörper die vorteilhaften Festigkeitseigenschaften des Speichenrohlings auch nach dem Formen der neuen Querschnittsgeometrie erhalten bleiben oder sogar verbessert werden. So ist beispielsweise eine aerodynamische Querschnittsgeometrie mit einer besonders hohen Zugfestigkeit und Bruchfestigkeit möglich. Zudem wird bei einer solchen Ausgestaltung die Festigkeit auch dann nicht unerwünscht beeinträchtigt, wenn die Vorstufe des Übergangsabschnitts etwas länger oder kürzer ist, als der fertige Übergangsabschnitt.

Bevorzugt und vorteilhaft ist, dass die Vorstufen der Übergangsabschnitte jeweils einen Kegelwinkel von maximal 11° und vorzugsweise maximal 10° und besonders bevorzugt maximal 9° aufweisen. Durch solche Kegelwinkel können die Vorstufen der Übergangsabschnitte besonders unaufwendig mit einer geeigneten Toleranz gefertigt werden. Dabei ist zugleich noch eine zügige und somit wirtschaftliche Fertigung des Speichenrohlings möglich, z. B. mittels Freiform-Schmieden. Insbesondere wird im Rahmen der vorliegenden Erfindung unter einem Kegelwinkel der Öffnungswinkel des Kegels verstanden. Falls ein Winkel zwischen der Mantelfläche des Kegels und der zentralen Mittelachse des Speichenkörpers betrachtet werden sollte, sind die hier gemachten Winkelangaben zu halbieren.

Dabei ist bevorzugt, dass die Größe des Kegelwinkels in Abhängigkeit der Länge des Übergangsabschnitts und/oder einer Durchmesserdifferenz, welche durch den Übergangsabschnitt überwunden werden soll, festgelegt werden. Insbesondere liegt der Kegelwinkel an einem oberen Ende der hier definierten Winkel bzw. Winkelbereiche, wenn der Übergangsabschnitt eine große Durchmesserdifferenz zwischen Endabschnitt und Zentralabschnitt überwinden muss. Insbesondere liegt der Kegelwinkel an einem unteren Ende der hier definierten Winkel bzw. Winkelbereiche, wenn der Übergangsabschnitt eine kleine Durchmesserdifferenz zwischen Endabschnitt und Zentralabschnitt überwinden muss.

Zusätzlich oder alternativ kann der Kegelwinkel danach ausgewählt werden, wie lang die Vorstufe des Übergangsabschnitts ist. Insbesondere ist bei einer maximalen Durchmesserdifferenz von 0,75 mm ein Kegelwinkel von maximal 11° und vorzugsweise maximal 10° und besonders bevorzugt maximal 9° vorgesehen. Insbesondere ist bei einer maximalen Durchmesserdifferenz von 0,6 mm oder 0,5 mm ein Kegelwinkel von maximal 8° und vorzugsweise maximal 7° und besonders bevorzugt maximal 6° vorgesehen.

Es ist bevorzugt und vorteilhaft, dass die Übergangsabschnitte durch das Umformen mit dem Formwerkzeug jeweils einen in Richtung des Zentralabschnitts abnehmenden minimalen Durchmesser erhalten. Insbesondere korrespondiert die Abnahme des minimalen Durchmessers mit dem jeweiligen (in Richtung des Zentralabschnitts abnehmenden) Durchmesser der Vorstufen der Übergangsabschnitte. Möglich ist auch, dass die Abnahme des minimalen Durchmessers der Übergangsabschnitte mit dem Kegelwinkel der Vorstufen der Übergangsabschnitte korrespondiert. Es ist möglich, dass die Übergangsabschnitte jeweils einen Kegelwinkel aufweisen, welcher mit dem Kegelwinkel der jeweiligen Vorstufen der Übergangsabschnitte korrespondiert. Unter dem Begriff "korrespondieren" wird insbesondere verstanden, dass die Kegelwinkel in einen Zusammenhang stehen, welcher durch eine Funktion oder einen Faktor beschrieben wird oder dass sie sich um maximal 10 % und vorzugsweise maximal 5 % unterscheiden.

Vorzugsweise werden die Vorstufen der Übergangsabschnitte mit einer Länge gefertigt, welche wenigstens das Vierzehnfache und insbesondere wenigstens das Sechzehnfache und besonders bevorzugt wenigstens das Achtzehnfache eines Differenzbetrags zwischen dem Durchmesser der Vorstufe des Zentralabschnitts und dem Durchmesser der Vorstufen der Endabschnitte beträgt. Insbesondere weisen dann auch die Übergangsabschnitte des fertigen Speichenkörpers eine solche Länge auf.

Möglich und vorteilhaft ist auch, dass die Vorstufen der Übergangsabschnitte mit einer Länge gefertigt werden, welche wenigstens das Fünfzehnfache und vorzugsweise wenigstens das Sechzehnfache und besonders bevorzugt wenigstens das Achtzehnfache eines Differenzbetrags zwischen dem minimalen Durchmesser der Endabschnitte und dem minimalen Durchmesser des Zentralabschnitts beträgt.

Solche Dimensionierungen der Vorstufen der Übergangsabschnitte sind vorzugsweise bei Ausführungen vorgesehen, bei denen der Differenzbetrag wenigstens 0,35 mm und bevorzugt wenigstens 0,4 mm ist. Bei Ausführungen mit einem geringeren Differenzbetrag, beispielsweise weniger als 0,3 mm und bevorzugt weniger als 0,27 mm, ist bevorzugt, dass die Vorstufen der Übergangsabschnitte mit einer Länge gefertigt werden, welche wenigstens das Zwanzigfache und insbesondere wenigstens das 23-fache und besonders bevorzugt wenigstens das 25-fache des Differenzbetrags zwischen dem Durchmesser der Vorstufe des Zentralabschnitts und dem Durchmesser der Vorstufen der Endabschnitte beträgt.

Bevorzugt ist, dass die Vorstufen der Übergangsabschnitte mit einer Länge gefertigt werden, welche wenigstens das Dreifache und insbesondere wenigstens das 3,5-fache und besonders bevorzugt wenigstens das Vierfache des Durchmessers der Vorstufen der Endabschnitte beträgt.

In vorteilhaften Ausgestaltungen weisen die Vorstufen der Übergangsabschnitte jeweils eine Länge von wenigstens 7 mm und vorzugsweise wenigstens 7,5 mm auf. Bevorzugt und vorteilhaft ist, dass die Vorstufen der Übergangsabschnitte jeweils eine Länge zwischen 8 mm +/- 1 mm und 10 mm +/- 1 mm und vorzugsweise eine Länge von 9 mm +/- 1 mm aufweisen.

Es hat sich gezeigt, dass der Speichenrohling aufgrund solcher Längenvorgaben mit besonders geeigneten Toleranzen gefertigt werden kann. Das ist besonders dann von Vorteil, wenn der Speichenrohling durch freies Schmieden eines endlosen Drahtwerkstoffs (also ohne ein Formwerkzeug mit einer Negativform) geformt wird. Zudem wirken sich die Toleranzen bei solchen Längen nicht ungünstig auf die Festigkeit der fertigen Speiche aus.

In einer besonders vorteilhaften Ausgestaltung weisen die Übergangsabschnitte jeweils eine Länge auf, welche wenigstens das Fünffache und vorzugsweise wenigstens das Sechsfache des minimalen Durchmessers des Zentralabschnitts beträgt. Insbesondere ist der minimale Durchmesser des Zentralabschnitts kleiner als der minimale und insbesondere auch der maximale Durchmesser der Endabschnitte. Das ist insbesondere dort vorgesehen, wo der Endabschnitt einen zylindrischen Querschnitt aufweist.

In einer vorteilhaften Ausgestaltung ist vorgesehen, dass sich die Übergangsabschnitte von ihren jeweiligen Vorstufen in Bezug auf Ihre Länge und/oder auf ihre Position auf einer Längsachse des Speichenkörpers um maximal 2 mm und vorzugsweise maximal 1,5 mm und besonders bevorzugt maximal 1 mm unterscheiden. Die Position auf der Längsachse des Speichenkörpers kann beispielsweise über den Abstand des Übergangsabschnitts zum Zentralabschnitt oder zu einem Endabschnitt oder zu einem Ende der Speiche definiert werden.

Insbesondere ist eine Durchmesserdifferenz zwischen dem Durchmesser der Vorstufe des Zentralabschnitts und den jeweiligen Durchmessern der Vorstufen der Endabschnitte vorgesehen, welche zwischen 0,4 mm und 0,8 mm beträgt. Insbesondere überbrücken die Vorstufen der Übergangsabschnitte diese Durchmesserdifferenz. Besonders vorteilhaft ist z. B. eine Durchmesserdifferenz von 0,43 mm (insbesondere +/- 0,02 mm). Möglich sind auch Ausführungen mit einer geringeren Durchmesserdifferenz, beispielsweise für Laufräder mit besonders hohen Lasteinträgen. Dann kann die Durchmesserdifferenz zwischen 0,20 mm und 0,4 mm betragen betragen. Besonders vorteilhaft ist dann z. B. eine Durchmesserdifferenz von 0,25 mm (insbesondere +/- 0,02 mm).

Die zuvor beschriebenen Längen für die Vorstufen der Übergangsabschnitte sind insbesondere dann besonders vorteilhaft, wenn der Differenzbetrag wenigstens ein Sechstel und vorzugsweise wenigstens ein Fünftel und besonders bevorzugt wenigstens ein Viertel des Durchmessers der Vorstufen der Endabschnitte beträgt. Beispielsweise ist es vorteilhaft, dass der Differenzbetrag 0,5 mm +/- 0,1 mm beträgt. In besonderen Fällen, beispielsweise bei besonders leichten Speichen für Straßenradsportfahrräder, kann der Differenzbetrag auch 0,7 mm +/- 0,1 mm betragen.

Für Ausführungen mit geringeren Durchmesserdifferenzen ist es bevorzugt und vorteilhaft, wenn der Differenzbetrag wenigstens ein Neuntel und vorzugsweise wenigstens ein Achtel und besonders bevorzugt wenigstens ein Siebtel des Durchmessers der Vorstufen der Endabschnitte beträgt. Beispielsweise ist es dann vorteilhaft, dass der Differenzbetrag 0,3 mm +/- 0,1 mm beträgt.

Der Durchmesser der Vorstufen der Endabschnitte liegt in vorteilhaften Ausführungen beispielsweise bei 2 mm +/- 0,1 mm und im Wesentlichen bei 2 mm. In vorteilhaften Ausgestaltungen liegt der Durchmesser der Vorstufe des Zentralabschnitts beispielsweise bei 1,5 mm +/- 0,25 mm. Insbesondere liegt der Durchmesser der Vorstufe des Zentralabschnitts bei wenigstens 1,25 mm und maximal bei 1,65 mm. Insbesondere weist die Vorstufe des Zentralabschnitts einen Durchmesser von 1,5 mm +/- 0,1 mm auf. Möglich und vorteilhaft sind auch Ausführungen (beispielsweise für besonders leichte Laufräder), bei denen die Vorstufe des Zentralabschnitts einen Durchmesser von 1,3 mm +/- 0,1 mm aufweist.

In allen Ausgestaltungen ist es bevorzugt, dass durch das Umformen des Speichenrohlings mit dem Formwerkzeug ein Speichenkörper geformt wird, bei welchem wenigstens 75 % der Länge der Übergangsabschnitte und vorzugsweise wenigstens 90 % der Länge der Übergangsabschnitte und besonders bevorzugt wenigstens die gesamte Länge der Übergangsabschnitte benötigt wird, um den minimalen Durchmesser des Zentralabschnitts an den jeweiligen minimalen Durchmesser der Endabschnitte anzugleichen. Dadurch kann ein großer Teil oder der gesamte Übergangsabschnitt genutzt werden, um die verschiedenen Durchmesser anzugleichen. So werden kurze bzw. steile Übergänge vermieden. Zudem kann dadurch unaufwendig und zugleich zuverlässig gewährleistet werden, dass der fertige Speichenkörper keine ungünstigen geometrischen Abweichungen gegenüber dem Speichenrohling aufweist, wodurch es zu einer Verringerung der Zugfestigkeit und/oder Bruchfestigkeit kommen kann.

Durch das Umformen des Speichenrohlings mit dem Formwerkzeug werden wenigstens die Vorstufen der Übergangsabschnitte und die Vorstufe des Zentralabschnitts vorzugsweise derart umgeformt, dass deren Querschnittsumfang jeweils stärker verändert wird als deren Querschnittsfläche. Mit anderen Worten, durch das Umformen des Speichenrohlings mit dem Formwerkzeug wird ein Verhältnis von Querschnittsumfang zur Querschnittsfläche gezielt verändert. Dadurch wird zuverlässig erreicht, dass größere Toleranzen und beispielsweise Längenabweichungen bei den Vorstufen der Übergangsabschnitte die Zugfestigkeit und Bruchfestigkeit der fertigen Speiche nicht oder nur unwesentlich beeinträchtigen.

Bei dem Speichenrohling verhält sich der Querschnittsumfang insbesondere proportional zur Querschnittsfläche. Beim fertigen Speichenkörper kann sich der Querschnittsumfang im Übergangsabschnitt abschnittsweise umgekehrt proportional zur Querschnittsfläche verhalten. Mit anderen Worten, beim fertigen Speichenkörper kann der Querschnittsumfang im Übergangsabschnitt zunehmen, obwohl die Querschnittsfläche in Richtung des Zentralabschnitts abnimmt. Möglich und vorteilhaft ist auch, dass beim fertigen Speichenkörper der Querschnittsumfang im Übergangsabschnitt in Richtung des Zentralabschnitts weniger stark abnimmt, als die Querschnittsfläche. Insbesondere ist vorgesehen, dass sich ein Proportionalitätsfaktor bzw. das Verhältnis von Querschnittsumfang und Querschnittsfläche durch das Umformen des Speichenrohlings in den Speichenkörper ändert.

Nach dem Umformen mit dem Formwerkzeug nimmt der Querschnittsumfang insbesondere weniger stark ab als die Querschnittsfläche. Insbesondere nimmt der Querschnittsumfang in Richtung des Zentralabschnitts sogar abschnittsweise zu, während die Querschnittsfläche abnimmt. Querschnittsumfang und Querschnittsfläche bleiben im Zentralabschnitt insbesondere (im Wesentlichen und z. B. zu 90% oder mehr) konstant.

Insbesondere wird der Speichenrohling mit dem Formwerkzeug derart umgeformt, dass wenigstens der Zentralabschnitt einen größeren Querschnittsumfang als eine Vorstufe erhält und/oder dass wenigstens die Übergangsabschnitte jeweils einen größeren Querschnittsumfang als ihre Vorstufen erhalten. Insbesondere wird der Querschnittsumfang beim Umformen mit dem Formwerkzeug wenigstens im Zentralabschnitt vergrößert.

Insbesondere wird beim Umformen des Speichenrohlings mit dem Formwerkzeug die Querschnittsfläche im Wesentlichen nicht verändert. Insbesondere ist eine maximale Verringerung der Querschnittsfläche von 10 % und besonders bevorzugt von maximal 5 % oder sogar nur 2 % vorgesehen. Insbesondere wird die Querschnittsfläche durch das Umformen mit dem Formwerkzeug nicht vergrößert.

Insbesondere nimmt in einem Übergangsabschnitt, vorzugsweise in beiden Übergangsabschnitten, eine Querschnittsfläche des Speichenkörpers in Richtung des Zentralabschnitts ab, insbesondere während dort zugleich der Querschnittsumfang entweder um ein geringeres Maß als die Querschnittsfläche abnimmt oder sogar zunimmt.

Insbesondere nimmt der Querschnittsumfang im Übergangsabschnitt in Richtung des Zentralabschnitts zunächst um ein geringeres Maß ab als die Querschnittsfläche und nimmt anschließend zu. Insbesondere ist im Zentralabschnitt ein Verhältnis von Querschnittsumfang zur Querschnittsfläche (im Wesentlichen und z. B. zu 90% oder mehr) konstant. Insbesondere ist im Zentralabschnitt ein Verhältnis von Querschnittsumfang zur Querschnittsfläche größer als in den Endabschnitten und/oder in den Übergangsabschnitten.

In einer besonders vorteilhaften Weiterbildung wird der Speichenrohling mit dem Formwerkzeug derart umgeformt, dass der Speichenkörper wenigstens in den Übergangsabschnitten wenigstens abschnittsweise einen Rumpf und zwei Flügel aufweist. Eine solche Geometrie hat sich als vorteilhaft erwiesen, damit unerwünschte Toleranzen und beispielsweise Längenabweichungen bei den Vorstufen der Übergangsabschnitte nicht oder nur unwesentlich zu einer Beeinträchtigung der gewünschten Zugfestigkeit und Bruchfestigkeit der fertigen Speiche führen. Insbesondere ermöglichen die Flügel und der Rumpf eine vorteilhafte Stabilisierung der Übergangsabschnitte, wenn diese gezielt in den Vorstufen der Übergangsabschnitte positioniert werden.

Durch die Ausformung von Rumpf und Flügeln in Kombination mit der Anordnung dieser Strukturen in den Übergangsabschnitten konnten die Bruchfestigkeit und auch die Zugfestigkeit verbessert werden. Zugleich ist durch die Ausformung von Rumpf und Flügeln eine Einsparung von Gewicht möglich, da die Übergänge insgesamt dünner ausfallen können, ohne dass sich ungünstig auf die Haltbarkeit auswirkt. Zudem bietet eine Geometrie mit Rumpf und Flügeln vorteilhafte aerodynamische Eigenschaften. Es konnte beobachtet werden, dass die Ausformung von Rumpf und Flügeln ohne Berücksichtigung der geometrischen Eigenschaften der Vorstufen der Übergangsabschnitte zu keinen nennenswerten Verbesserungen führt.

Insbesondere sind die Flügel einstückig mit dem Rumpf verbunden. Insbesondere erstrecken sich die Flügel an gegenüberliegenden Längsseiten des Rumpfes. Insbesondere sind der Rumpf und die Flügel wenigstens abschnittsweise im Zentralabschnitt ausgebildet. Insbesondere sind Rumpf und Flügel im gesamten Zentralabschnitt ausgebildet. Rumpf und Flügel können auch abschnittsweise in wenigstens einem der Endabschnitte ausgebildet sein. Insbesondere umfasst das Formwerkzeug eine Negativform des Speichenkörpers mit Rumpf und Flügeln. Mit anderen Worten, das Formwerkzeug bildet eine Negativform des Speichenkörpers mit Rumpf und Flügeln ab. Insbesondere ist das Formwerkzeug so ausgebildet, dass damit die hier beschriebenen Eigenschaften von Rumpf und Flügel aus dem Speichenrohling geformt werden können.

Insbesondere erstrecken sich die Flügel seitlich am Rumpf. Insbesondere sind die Flügel gegenüberliegend am Rumpf angeordnet. Insbesondere erstrecken sich die Flügel und der Rumpf über die gesamte Länge wenigstens eines Übergangsabschnitts und vorzugsweise beider Übergangsabschnitte. Insbesondere sind der Rumpf und die Flügel im Zentralabschnitt und in den Übergangsabschnitten durchgehend ausgebildet. Insbesondere sind der Rumpf und die Flügel durchgehend von einem Übergangsabschnitt über den Zentralabschnitt bis zum nächsten Übergangsabschnitt ausgebildet.

Vorzugsweise wird eine Spannweite der Flügel wenigstens dort zunehmend ausgebildet, wo die Durchmesser der Vorstufen der Übergangsabschnitte zuvor abnehmend ausgebildet wurden. Insbesondere sind überall dort die Flügel ausgebildet, wo beim Speichenrohling die Vorstufen der Übergangsabschnitte ausgebildet waren.

Insbesondere erstrecken sich die Flügel und der Rumpf bis in wenigstens einen der beiden Endabschnitte und vorzugsweise bis in beide Endabschnitte hinein. Insbesondere sind die Endabschnitte außerhalb der Flügel und des Rumpfes wenigstens abschnittsweise zylindrisch ausgebildet.

Vorzugsweise weist der Rumpf eine Querschnittshöhe auf, welche größer ist als eine Querschnittshöhe der Flügel. Insbesondere ist die Querschnittshöhe der Flügel im Zentralabschnitt geringer als die Querschnittshöhe des Rumpfes.

Vorzugsweise weist der Rumpf eine rundliche Querschnittsgeometrie auf. Der Rumpf weist insbesondere einen runden oder ovalen, insbesondere elliptischen, Querschnitt auf. Insbesondere ist der Rumpf zylindrisch oder als ein Prisma mit einem ovalen bzw. elliptischen Querschnitt ausgebildet. Der Rumpf kann auch einen Querschnitt aufweisen, welcher einem abgerundeten Rechteck bzw. einem abgerundeten Quadrat entspricht. Insbesondere ist der Rumpf dann als ein Prisma mit einem solchen Querschnitt ausgebildet. Insbesondere ist ein Teil des Rumpfes durch die Flügel verdeckt. Insbesondere ragt der Rumpf oberhalb und unterhalb einer Hauptseite der Flügel über die Flügel hinaus.

Insbesondere ist die Querschnittsgeometrie des Rumpfes mit einer Querschnittsgeometrie der Flügel verschmolzen. Insbesondere weist der Speichenkörper eine Querschnittsgeometrie auf, welche aus der Querschnittsgeometrie des Rumpfes und der Flügel zusammengesetzt ist. Es ist möglich, dass die Querschnittsgeometrie des Rumpfes im Zentralabschnitt in Bezug zur Querschnittsgeometrie des Rumpfes in den Übergangsabschnitten und/oder in den Endabschnitten gestaucht ausgebildet ist.

Vorzugsweise weist der Speichenkörper wenigstens in den Übergangsabschnitten und im Zentralabschnitt eine Querschnittsgeometrie auf, bei welcher die Flügel jeweils mit einem kurvenartigen Verlauf in den Rumpf übergehen. Insbesondere gehen die Flügel jeweils mit einem kurvenartigen Verlauf mit einer Wendestelle in den Rumpf über. Insbesondere geht der Rumpf durch Veränderung eines Krümmungsradius in die Flügel über. Insbesondere weisen Rumpf und Flügel unterschiedliche Krümmungsradien auf.

Es ist auch möglich, dass die Flügel jeweils mit einem kurvenartigen Verlauf ohne eine Wendestelle in den Rumpf übergehen. In einem solchen Fall kann Querschnittsgeometrie des Speichenkörpers dann als linsenförmig bezeichnet werden.

Insbesondere sind die Flügel an ihren Hauptseiten gekrümmt ausgebildet. Vorzugsweise sind die Flügel dabei mit einem anderen Radius als die Querschnittsgeometrie des Rumpfes gekrümmt. Möglich ist auch, dass die Flügel wenigstens abschnittsweise gerade verlaufende Hauptseiten aufweisen.

Möglich ist auch, dass der Rumpf und die Flügel Querschnittsgeometrien aufweisen, welche mit jeweils gleichen Radien gekrümmt sind. Dann es bevorzugt, dass die Radien für den Rumpf und die Flügel von verschiedenen (gedachten) Kreismittelpunkten ausgehen. Beispielsweise ergibt sich so eine Querschnittsgeometrie für den Speichenkörper, welche durch vier Kreise gebildet wird, welche teilweise überlappen. Dabei ist jeweils ein Kreis für die Flügel vorgesehen, während der Rumpf durch zwei Kreise gebildet wird. Eine solche Querschnittsgeometrie kann auch als Vierpass bezeichnet werden.

Insbesondere sind die Flügel mittig am Rumpf ausgerichtet. Insbesondere sind die Flügel spiegelsymmetrisch zueinander am Rumpf angeordnet. Insbesondere bildet die Längsachse des Speichenkörpers die Symmetrieachse. Insbesondere sind die Flügel gleich ausgebildet. Insbesondere sind die Flügel gleich lang. Insbesondere bilden der Rumpf und die Flügel zusammen einen symmetrischen Querschnitt.

Insbesondere sind die Flügel an ihren vom Rumpf abgewandten Querseiten wenigstens abschnittsweise konvex gewölbt. Mit anderen Worten, die Flügel sind an ihren Querseiten nach außen gewölbt.

Insbesondere ist eine Querschnittshöhe der Flügel in Richtung des Rumpfes zunehmend ausgebildet. Insbesondere nimmt die Querschnittshöhe der Flügel quer zur Längsrichtung zu. Eine solche Ausgestaltung ist insbesondere wenigstens im Zentralabschnitt vorgesehen. Dadurch ergibt sich insbesondere ein fließender Übergang der Flügel in den Rumpf.

Insbesondere bleiben die Flügel und/oder der Rumpf über wenigstens einen überwiegenden Teil des Zentralabschnitts und vorzugsweise über wenigstens 90 % des Zentralabschnitts oder auch über den gesamten Zentralabschnitt unverändert.

Es ist vorteilhaft und bevorzugt, dass die Flügel und/oder der Rumpf in wenigstens einem der Übergangsabschnitte und vorzugsweise in beiden Übergangsabschnitte eine veränderliche Querschnittsgeometrie aufweisen. Insbesondere ist das Maß für die Veränderung der Querschnittsgeometrie in beiden Übergangsabschnitten gleich.

Vorzugsweise nimmt eine Spannweite der Flügel in wenigstens einem der Übergangsabschnitte und insbesondere in beiden Übergangsabschnitten in Richtung des Zentralabschnitts zu. Insbesondere nimmt eine Spannweite der Flügel in den Übergangsabschnitten in Richtung des Endabschnitts ab. Die Spannweite der Flügel im Zentralabschnitt und insbesondere auch abschnittsweise in den Übergangsabschnitten ist größer als der minimale und vorzugsweise auch der maximale Durchmesser in den Endabschnitten. Vorzugsweise ist die Spannweite der Flügel im Zentralabschnitt (im Wesentlichen) konstant.

Vorzugsweise nimmt eine Querschnittshöhe der Flügel in wenigstens einem der Übergangsabschnitte und vorzugsweise in beiden Übergangsabschnitten in Richtung des Zentralabschnitts ab. Insbesondere nimmt eine Querschnittshöhe der Flügel in den Übergangsabschnitten in Richtung des Endabschnitts zu. Insbesondere gehen die Flügel dadurch in eine zylindrische Geometrie des Endabschnitts fließend über. Mit anderen Worten, die Flügel weisen in den Übergangsabschnitten eine in Richtung des Endabschnitts zunehmende Querschnittshöhe und/oder abnehmende Spannweite auf. Möglich ist auch, dass die Querschnittshöhe der Flügel im Übergangsabschnitt unverändert bleibt. Die Querschnittshöhe des Rumpfes im Zentralabschnitt ist insbesondere geringer als der minimale Durchmesser in den Endabschnitten.

Vorzugsweise nimmt eine Querschnittshöhe des Rumpfes in wenigstens einem der Übergangsabschnitte und vorzugsweise in beiden Übergangsabschnitten in Richtung des Zentralabschnitts ab. Insbesondere weist der Rumpf im Übergangsabschnitt eine in Richtung des Endabschnitts zunehmende Querschnittshöhe und/oder abnehmende Querschnittsbreite auf. Der Rumpf kann im Übergangsabschnitt (parabelartig) zulaufend ausgebildet sein. Dabei kann sich die Querschnittsgeometrie des Rumpfes derart in Längsrichtung verändern, dass wenigstens eines der in Längsrichtung liegenden Enden des Rumpfes (insbesondere beide) parabelartig ausgebildet ist. Die Querschnittsbreite des Rumpfes kann in den Übergangsabschnitten auch unverändert bleiben.

Die Querschnittsbreite des Rumpfes bezieht sich insbesondere auf einen gedachten Querschnitt des Rumpfes, welche unter Zuhilfenahme einer geometrischen Form (z. B. ein Kreis oder eine Ellipse oder ein Viereck) in den Gesamtquerschnitt des Speichenkörpers projiziert wird.

Es können auch vorteilhafte Ausgestaltungen vorgesehen sein, bei denen der Speichenrohling mit dem Formwerkzeug derart umgeformt wird, dass der Speichenkörper wenigstens in den Übergangsabschnitten und vorzugsweise auch im Zentralabschnitt wenigstens abschnittsweise eine Querschnittsgeometrie aufweist, welche in der Art einer Messerspeiche ausgebildet ist oder in der Art einer Tragfläche oder auch oval bzw. elliptisch ausgebildet ist.

Das Umformen des Drahtwerkstoffs zum Speichenrohling erfolgt insbesondere durch Kaltschmieden des Drahtwerkstoffs mittels wenigstens einer Schmiedeeinrichtung. Dabei erfolgt das Umformen des Drahtwerkstoffs zum Speichenrohling insbesondere mit wenigstens zwei gegenüberliegend angeordneten und schlagend auf den Drahtwerkstoff einwirkenden und vorzugsweise dabei um die Längsachse des Drahtwerkstoffs rotierenden Schlagwerkzeugen der Schmiedeeinrichtung (sog. rotary swaging). Ein solches Schmieden wird auch als freies Schmieden bzw. als Freiform-Schmieden bezeichnet, da kein Formwerkzeug mit Negativform eingesetzt wird, welche die Form des Ergebnisses fest vorgibt.

Das freie Schmieden des Drahtwerkstoffs zum Speichenrohling bringt neben den bekannten Vorteilen technisch bedingt mitunter aber auch große Abweichungen in der Länge und Position der einzelnen Vorstufen und besonders der Vorstufen der Übergangsabschnitte mit sich. Demgegenüber besteht das Problem, dass die Negativform des Formwerkzeugs für das nachfolgende Umformen des Speichenrohlings technisch bedingt nicht verändert werden kann. Mit anderen Worten, die Längen der einzelnen Abschnitte und beispielsweise der Übergangsabschnitte sind durch das Formwerkzeug fest vorgegeben.

Eine Möglichkeit, den Speichenrohling mit besonders engen Toleranzen zu fertigen, bietet die Verringerung der Relativgeschwindigkeit zwischen Drahtwerkstoff und Schmiedeeinrichtung (wie beispielsweise in der EP 3 135 396 B1 beschrieben).

Im Rahmen von Zugversuchen hat sich gezeigt, dass das Umformen des Speichenrohlings zur Erzeugung einer neuen Querschnittsgeometrie zu einer Verschlechterung der Speichenfestigkeit führen kann, wenn die neue Querschnittsgeometrie ohne Berücksichtigung der Länge der Vorstufen der Übergangsabschnitte erfolgt. Daher ist es entscheidend, dass der Speichenrohling und die Negativform des Formwerkzeugs gezielt aneinander angepasst sind.

Mit der vorliegenden Erfindung kann hingegen sehr unaufwendig gewährleistet werden, dass die Negativform für die neuen Übergangsabschnitte im Formwerkzeug möglichst genau dort liegt, wo auch die Vorstufen der Übergangsabschnitte im Speichenrohling angeordnet sind. Zudem gewährleisten die hier vorgestellten geometrischen Ausgestaltungen der Vorstufen (insb. Länge, Kegelwinkel) und der Übergangsabschnitte (insb. Rumpf und Flügel) auch dann eine besonders hohe Festigkeit der Speiche, wenn die Vorstufen größere Toleranzen aufweisen. So können die Vorstufen der Übergangsabschnitte so ausgeformt werden, dass durch das anschließende Umformen mit dem Formwerkzeug keine unerwünschten Beeinträchtigungen der Festigkeit der fertigen Speiche auftreten oder die Festigkeit sogar erhöht wird. Zudem kann auf eine Verringerung der Geschwindigkeit ganz oder zumindest teilweise verzichtet werden.

Insbesondere umfassen die Schlagwerkzeuge jeweils einen kanalartigen Schmiedeabschnitt. Der Schmiedeabschnitt dient zum teilweisen Umschließen des Drahtwerkstoffs. Insbesondere umfassen die Schmiedeabschnitte jeweils zwei Nebenabschnitte und einen (in Längsrichtung des Schmiedeabschnitts und/oder des Drahtwerkstoffs) zwischen den Nebenabschnitten liegenden Hauptabschnitt. Insbesondere sind die Nebenabschnitte jeweils abgewinkelt zum Hauptabschnitt angeordnet. Insbesondere liegen die Nebenabschnitte in einer gemeinsamen Ebene mit dem Hauptabschnitt. Insbesondere verläuft durch diese Ebene auch die Längsachse des zu bearbeitenden Drahtwerkstoffs. Mit solchen Schlagwerkzeugen können die hier beschriebenen Eigenschaften des Speichenrohlings besonders gut hergestellt werden. Vorzugsweise weist der Schmiedeabschnitt eine wenigstens abschnittsweise quer zur Längsrichtung (und/oder Vorschubrichtung) des zu bearbeitenden Drahtwerkstoffs ausgebildete konkave Abrundung auf. In einer besonders vorteilhaften Ausgestaltung dient die Negativform des Rumpfes als eine Positionierhilfe beim Einlegen des Speichenrohlings in das Formwerkzeug. Vorzugsweise dient die Negativform des Rumpfes auch zur Fixierung des Speichenrohlings während während der Umformung mit dem Formwerkzeug.

Insbesondere bewegt sich der Drahtwerkstoff beim Umformen relativ zu Schmiedeeinrichtung in Richtung seiner Längsachse. Vorzugsweise wird eine Geschwindigkeit dieser Relativbewegung verringert, wenn die Übergangsabschnitte geschmiedet werden. Dadurch kann die Ausformung der Übergangsabschnitte noch gezielter an die Negativform des Formwerkzeugs angepasst werden.

Die erfindungsgemäße Speiche ist für ein Laufrad eines wenigstens teilweise muskelbetriebenen Fahrrades vorgesehen. Die Speiche umfasst einen Speichenkörper, welcher (in der bestimmungsgemäßen Einbauposition in dem Laufrad) ein nabenseitiges erstes Ende und ein felgenseitiges zweites Ende und wenigstens einen sich zwischen den Enden erstreckenden Zentralabschnitt aufweist. Den Enden ist jeweils ein Endabschnitt zugeordnet. Ein minimaler Durchmesser des Zentralabschnitts ist geringer als ein minimaler Durchmesser der Endabschnitte. Zwischen dem wenigstens einen Zentralabschnitt und den Endabschnitten ist jeweils ein Übergangsabschnitt angeordnet. Der Übergangsabschnitt weist einen in Richtung des Zentralabschnitts abnehmenden minimalen Durchmesser auf. Dabei weist der Speichenkörper wenigstens in den Übergangsabschnitten wenigstens abschnittsweise einen Rumpf und zwei Flügel auf. Die Flügel erstrecken sich an gegenüberliegenden Längsseiten des Rumpfes. Vorzugsweise nimmt eine Spannweite der Flügel in wenigstens einem der Übergangsabschnitte in Richtung des Zentralabschnitts zu. Insbesondere weisen die Übergangsabschnitte jeweils eine Länge auf, welche wenigstens das Vierfache und vorzugsweise wenigstens das Fünffache und besonders bevorzugt wenigstens das Sechsfache des minimalen Durchmessers des Zentralabschnitts beträgt und/oder welche wenigstens das 3,5-fache und vorzugsweise wenigstens das Vierfache des minimalen Durchmessers der Endabschnitte beträgt. Insbesondere weisen die Übergangsabschnitte jeweils eine Länge auf, welche wenigstens das 4,5-fache oder sogar wenigstens das Fünffache des minimalen Durchmessers der Endabschnitte beträgt.

Auch die erfindungsgemäße Speiche löst die zuvor gestellte Aufgabe besonders vorteilhaft. Es hat sich gezeigt, dass eine solche Länge der Übergangsabschnitte in Kombination mit der Rumpf-Flügel-Geometrie für die Festigkeit der späteren Speiche besonders entscheidend ist.

Der minimale Durchmesser des Zentralabschnitts entspricht insbesondere der (minimalen) Querschnittshöhe des Rumpfes im Zentralabschnitt. Der minimale Durchmesser der Endabschnitte entspricht insbesondere dem Durchmesser der Endabschnitte, wenn diese zylindrisch ausgebildet sind.

Es ist möglich und vorteilhaft, dass die Übergangsabschnitte jeweils eine Länge aufweisen, welche wenigstens das Vierzehnfache und insbesondere wenigstens das Sechzehnfache und besonders bevorzugt wenigstens das Achtzehnfache eines Differenzbetrags zwischen dem minimalen Durchmessers der Endabschnitte und dem minimalen Durchmessers des Zentralabschnitts beträgt.

Solche Dimensionierungen der Vorstufen der Übergangsabschnitte sind vorzugsweise bei Ausführungen vorgesehen, bei denen der Differenzbetrag wenigstens 0,35 mm und bevorzugt wenigstens 0,4 mm ist. Bei Ausführungen mit einem geringeren Differenzbetrag, beispielsweise weniger als 0,3 mm und bevorzugt weniger als 0,27 mm, ist bevorzugt, dass die Vorstufen der Übergangsabschnitte mit einer Länge gefertigt werden, welche wenigstens das Zwanzigfache und insbesondere wenigstens das 23-fache und besonders bevorzugt wenigstens das 25-fache des Differenzbetrags zwischen dem Durchmesser der Vorstufe des Zentralabschnitts und dem Durchmesser der Vorstufen der Endabschnitte beträgt.

Die erfindungsgemäße Speiche wird insbesondere nach dem zuvor beschriebenen Verfahren hergestellt. Insbesondere ist das Verfahren so ausgebildet, dass die hier beschriebene Speiche hergestellt werden kann. Insbesondere ist die Speiche so ausgebildet, dass sie nach dem hier beschriebenen Verfahren herstellbar ist. Es ist möglich und unabhängig vom gewählten Herstellungsverfahren, dass die erfindungsgemäße Speiche räumlich-körperliche Merkmale aufweist, wie sie zuvor im Rahmen des Herstellungsverfahrens für die Speiche beschrieben wurden. Dabei kann die erfindungsgemäße Speiche auch nach einem anderen Verfahren hergestellt sein.

Ein Laufrad, welches für ein wenigstens teilweise muskelbetriebenes Fahrrad vorgesehen ist, umfasst wenigstens eine Nabe und wenigstens eine Felge. Dabei ist die Nabe mit der Felge über eine Vielzahl von Speichen verbunden. Die Speichen sind insbesondere jeweils so ausgebildet, wie es zuvor beschrieben wurde. Insbesondere sind die Speichen nach dem zuvor beschriebenen Verfahren hergestellt.

Vorzugsweise ist das Laufrad so ausgebildet, dass die Speichen jeweils einen näher am nabenseitigen Ende und jeweils einen näher am felgenseitigen Ende angeordneten Übergangsabschnitt aufweisen. Dabei unterscheiden sich die den gleichen Enden zugeordneten Übergangsabschnitte in Bezug auf ihre Position auf einer Längsachse der Speiche um maximal 2 mm und insbesondere um maximal 1,5 mm und vorzugsweise um maximal 1 mm.

In Bezug auf eine bestimmungsgemäße Einbauposition in einem Laufrad sind die Flügel insbesondere so ausgerichtet, dass eine Ebene, welche sich durch beide Flügel erstreckt, parallel zur Laufradebene ist.

Insbesondere umfasst die Speiche wenigstens einen Speichenkopf und/oder wenigstens ein Gewinde. Insbesondere ist der Speichenkopf an einem Ende der Speiche ausgebildet. Insbesondere ist der Speichenkopf dem Endabschnitt nachgelagert. Insbesondere ist das Gewinde an dem anderen Endabschnitt ausgebildet. Insbesondere sind der Speichenkopf und/oder das Gewinde einstückig mit dem Speichenkörper ausgebildet. Insbesondere wird die Speiche durch den Speichenkörper und den Speichenkopf und/oder das Gewinde bereitgestellt.

Insbesondere ist der Speichenkörper einstückig ausgebildet. Insbesondere sind die Flügel einstückig mit dem Rumpf verbunden. Insbesondere sind der Zentralabschnitt und die Endabschnitte und die Übergangsabschnitte einstückig mit dem Speichenkörper ausgebildet.

Insbesondere werden die Übergangsabschnitte in Bezug zueinander symmetrisch ausgebildet. Insbesondere sind die Übergangsabschnitte gleich ausgebildet. Es ist möglich, dass die Übergangsabschnitte teilweise unterschiedlich ausgebildet sind und sich beispielsweise in ihrer Länge unterscheiden. Insbesondere sind die Übergangsabschnitte in Bezug auf ihre Querschnittsgeometrie und/oder in Bezug auf Veränderungen ihrer Querschnittsgeometrie entlang der Längsachse symmetrisch zueinander ausgebildet. Technisch bedingt kann die Kegelform der Vorstufen der Übergangsabschnitte von einer idealen Kegelform abweichen.

Die Endabschnitte können gleich ausgebildet sein. Es ist möglich, dass sich die Endabschnitte in ihrer Länge unterscheiden. Insbesondere weisen die Endabschnitte jeweils die gleiche Querschnittsgeometrie auf. Möglich ist aber auch, dass sich die Endabschnitte in ihrer Querschnittsgeometrie unterscheiden.

Bei einer Ausgestaltung mit Rumpf und Flügeln entspricht die Querschnittshöhe des Rumpfes insbesondere dem minimalen Durchmesser. So kann in den zuvor beschriebenen Ausführungen der minimale Durchmesser synonym mit der Querschnittshöhe des Rumpfes verwendet werden.

Das Formwerkzeug ist vorzugsweise so ausgebildet, dass die hier beschriebene Speiche (in einem Arbeitsgang) geformt werden kann. Insbesondere ist die Negativform des Formwerkzeugs so ausgebildet, dass der hier beschriebene Speichenkörper geformt wird. Das Formwerkzeug umfasst insbesondere wenigstens zwei Werkzeugeinheiten. Insbesondere bilden die wenigstens zwei Werkzeugeinheiten zusammen die Negativform des Speichenkörpers ab. Insbesondere werden die wenigsten zwei Werkzeugeinheiten auf den Speichenrohling gepresst, wodurch dieser zum Speichenkörper mit der neuen Querschnittsgeometrie umgeformt wird.

Die Grenze zwischen dem Übergangsabschnitt und dem daran angrenzenden Zentralabschnitt bzw. Endabschnitt ist insbesondere dadurch definiert, dass der minimale Durchmesser im Übergangsabschnitt in Richtung des Zentralabschnitts abnimmt und dass der minimale Durchmesser im Zentralabschnitt bzw. Endabschnitt (im Wesentlichen) konstant bleibt. Mit anderen Worten, der Zentralabschnitt bzw. der Endabschnitt beginnt vorzugsweise dort, wo die veränderliche Querschnittsgeometrie des Übergangsabschnitts aufhört (und eine konstante Querschnittsgeometrie beginnt). Insbesondere stellt der Übergangsabschnitt einen Übergang von einer (im Wesentlichen) konstanten Querschnittsgeometrie zu einer anderen (im Wesentlichen) konstanten Querschnittsgeometrie bereit.

Insbesondere ist der minimale Durchmesser im Zentralabschnitt und/oder in den Endabschnitten (im Wesentlichen) konstant. Insbesondere ist eine Querschnittsgeometrie des Zentralabschnitts und/oder der Endabschnitte (im Wesentlichen) konstant. Insbesondere sind Querschnittsumfang und Querschnittsfläche des Zentralabschnitts und/oder der Endabschnitte (im Wesentlichen) konstant. Insbesondere sind Rumpf und Flügel in Bezug auf ihre Querschnittsgeometrie (Querschnittshöhe, Querschnittsbreite, Spannweite etc.) im Zentralabschnitt (im Wesentlichen) konstant ausgebildet. Insbesondere sind Rumpf und Flügel in den Endabschnitten gar nicht ausgebildet oder in Bezug auf ihre Querschnittsgeometrie in den Endabschnitten (im Wesentlichen) konstant ausgebildet.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Fig. 1: eine schematische Seitenansicht eines Fahrrads;
- Fig. 2: eine rein schematische Darstellung einer Speiche in einer Draufsicht;
- Fig. 3: die Speiche nach Fig. 2 in einer Seitenansicht;
- Fig. 3a: eine rein schematische Darstellung einer Speiche in einer Seitenansicht;
- Fig. 4: ein Querschnitt der Speiche nach Fig. 2;
- Fig. 4a: ein Querschnitt einer Ausgestaltung der Speiche nach Fig. 2;
- Fig. 5: eine Detaildarstellung der Speiche nach Fig. 2 in einer perspektivischen Ansicht;
- Fig. 6: eine stark schematisierte Darstellung eines Verfahrensschritts bei der Herstellung eines Speichenrohlings;
- Fig. 7: eine stark schematisierte Darstellung eines Speichenrohlings in einer Seitenansicht und Querschnitte des Speichenrohlings;
- Fig. 8: eine rein schematische Detaildarstellung eines Formwerkzeugs zur Umformung eines Speichenrohlings in einer geschnittenen Seitenansicht; und
- Fig. 9: eine Skizze zur Veranschaulichung von Geometrieeigenschaften einer Speiche.

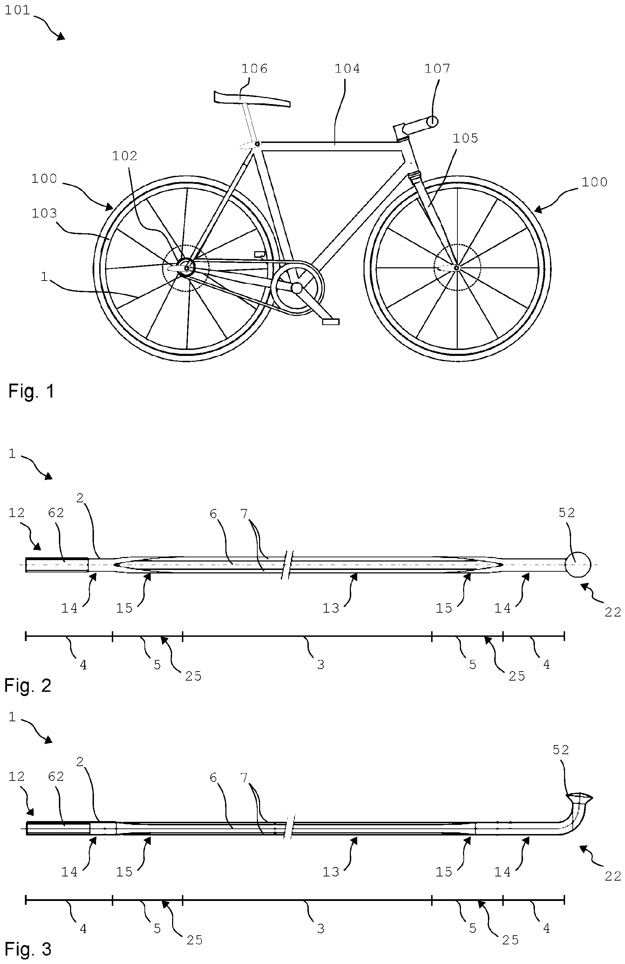

Die Figur 1 zeigt eine schematische Darstellung eines wenigstens teilweise muskelbetriebenen Fahrrades (101). Das Fahrrad 101 weist zwei Laufräder 100 auf, nämlich ein Vorderrad und ein Hinterrad. Weiterhin sind ein Rahmen 104, eine Gabel 105, ein Lenker 107 und ein Sattel 106 vorgesehen. Als Antrieb sind Pedalen und hier eine Kettenschaltung vorgesehen. Der Antrieb kann auch eine elektrische Unterstützung umfassen. Das Vorderrad und das Hinterrad sind jeweils an Ausfallenden an der Gabel 105 bzw. dem Rahmen 104 befestigt.

Die Laufräder 100 weisen jeweils eine Felge 103 und eine Nabe 102 und erfindungsgemäß hergestellte Speichen 1 auf. Die Speichen 1 verbinden die Felge 103 mit der Nabe 102. Die Speichen 1 sind aufgrund des Abbildungsmaßstabs hier nur schematisch dargestellt.

Nachfolgend wird eine erfindungsgemäße Speiche 1 mit Bezug zu den Figuren 2 bis 5 näher beschrieben. Die Speiche 1 ist zum Beispiel nach dem erfindungsgemäßen Verfahren hergestellt.

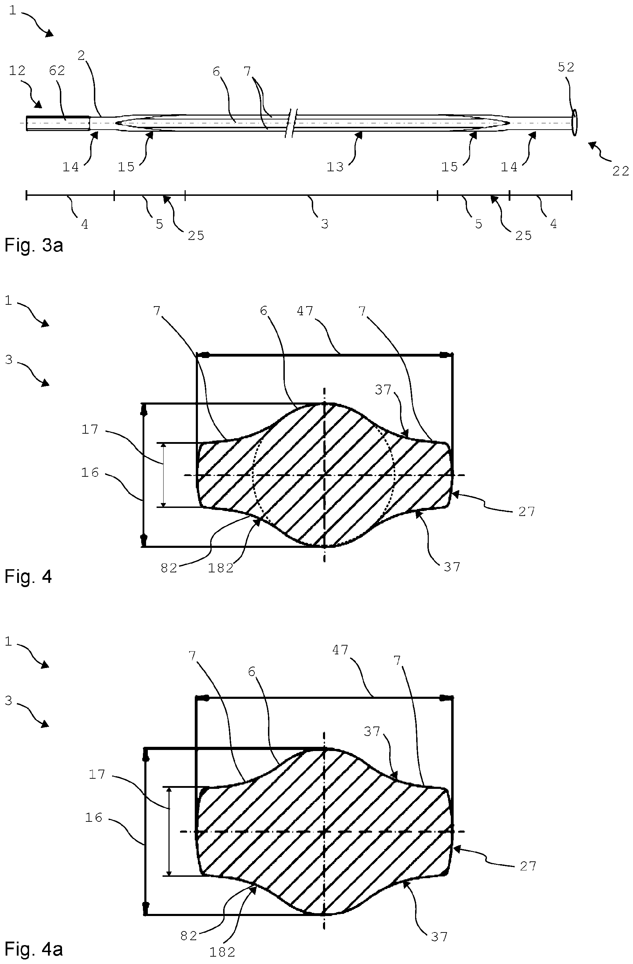

Die Speiche 1 umfasst einen Speichenkörper 2 und einen Speichenkopf 52 sowie ein Gewinde 62 zur Verschraubung mit einem hier nicht dargestellten Speichennippel. Der Speichenkörper 2 erstreckt sich zwischen einem felgenseitigen Ende 12, an welchem das Gewinde 62 angeordnet ist, und einem nabenseitigen Ende 22, an welchem der Speichenkopf 52 angeordnet ist. In der Variante der Figuren 2 und 3 ist der Kopf 52 abgewinkelt (sog. gekröpfte Speiche 1 bzw. cranked-head spoke). In der Variante der Figur 3a ist der Kopf gerade angeordnet (sog. straight-pull spoke bzw. straight-head spoke).

Den Enden 12, 22 ist jeweils ein Endabschnitt 4 des Speichenkörpers 2 zugeordnet. Zwischen den Enden 12, 22 erstreckt sich ein Zentralabschnitt 3, welcher hier den weitaus größten Teil der Speiche 1 ausmacht. Zwischen dem Zentralabschnitt 3 und den Endabschnitten 4 ist jeweils ein Übergangsabschnitt 5 angeordnet.

Im Zentralabschnitt 3 und in den Übergangsabschnitten 5 ist der Speichenkörper 2 mit einem Rumpf 6 und zwei Flügeln 7 ausgestattet. Die Flügel 7 erstrecken sich an gegenüberliegenden Längsseiten des Rumpfes 6 und sind hier beide identisch ausgebildet.

Die Speiche 1 ist hier einstückig ausgebildet und beispielsweise aus einer rostfreien Stahllegierung gefertigt. Somit sind der Speichenkörper 2 und der Speichenkopf 52 sowie das Gewinde 62 und auch alle Abschnitte 3, 4, 5 des Speichenkörpers 2 sowie der Rumpf 6 und die Flügel 7 einstückig miteinander verbunden.

Der Zentralabschnitt 3 weist hier einen minimalen Durchmesser 13 auf, welcher geringer ist als ein minimaler Durchmesser 14 der Endabschnitte 4. Die Übergangsabschnitte 5 weisen jeweils einen in Richtung des Zentralabschnitts 3 abnehmenden minimalen Durchmesser 15 auf. Die Unterschiede der Durchmesser 13, 14 werden somit durch die Übergangsabschnitte 5 stufenlos überbrückt.

Die Figur 4 zeigt einen Querschnitt durch den Zentralabschnitt 3. Wie hier gut zu erkennen, weist der Rumpf 6 eine Querschnittshöhe 16 auf, welche größer ist als eine Querschnittshöhe 17 der Flügel 7. Der Rumpf 6 weist eine rundliche Querschnittsgeometrie auf (siehe gestrichelter Kreis). In den Übergangsabschnitten 5 und im Zentralabschnitt 3 ist die Querschnittsgeometrie des Speichenkörpers 2 hier so ausgebildet, dass die Flügel 7 jeweils mit einem kurvenartigen Verlauf 82 mit einer Wendestelle 182 in den Rumpf 6 übergehen. Dazu sind die Flügel 7 hier an ihren Hauptseiten 37 entsprechend gekrümmt ausgebildet. Dadurch nimmt die Querschnittshöhe 17 der Flügel 7 hier in Richtung des Rumpfes 6 zu. An ihren Querseiten 27 sind die Flügel 7 konvex gewölbt ausgebildet.

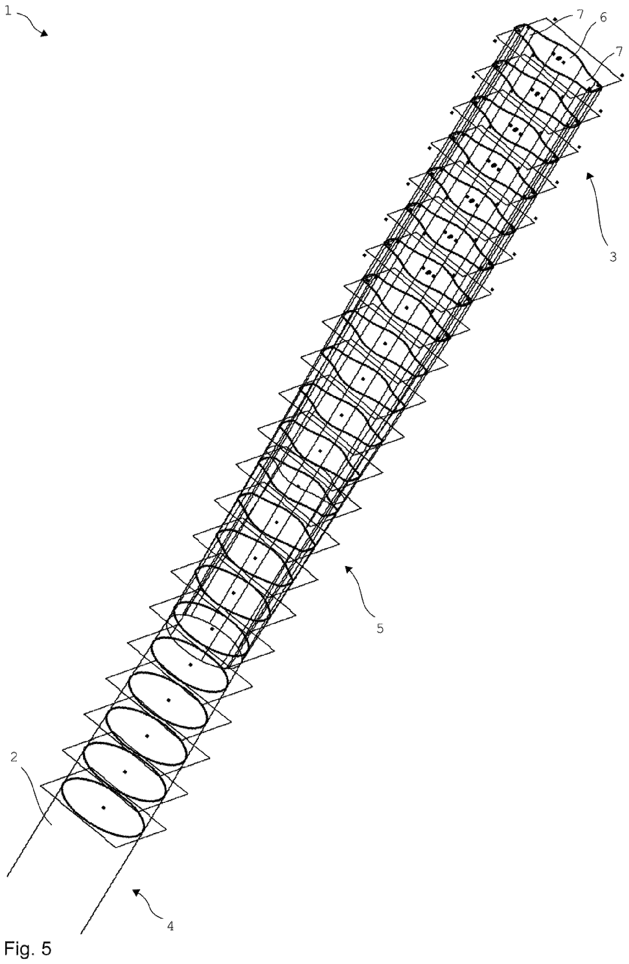

Der Übergangsabschnitt 5 und seine geometrischen Eigenschaften sind in der vergrößerten Detaildarstellung der Figur 5 besonders gut zu erkennen. Die Flügel 7 und der Rumpf 6 weisen in den Übergangsabschnitten 5 eine veränderliche Querschnittsgeometrie auf. Eine Spannweite 47 der Flügel 7 ist in den Übergangsabschnitten 5 in Richtung des Zentralabschnitts 3 zunehmend ausgebildet. Die Querschnittshöhe 17 der Flügel 7 nimmt in den Übergangsabschnitten 5 in Richtung des Zentralabschnitts 3 ab. Die Querschnittshöhe 16 des Rumpfes 6 nimmt in den Übergangsabschnitten 5 in Richtung des Zentralabschnitts 3 ab.

Die Spannweite 47 beträgt hier beispielsweise 2,3 mm. Die Querschnittshöhe 16 des Rumpfes 6 beträgt hier beispielsweise 1,3 mm.

Die Figur 4a zeigt einen Querschnitt durch den Zentralabschnitt 3 einer Ausgestaltung der zuvor beschriebenen Speiche 1. Hier ist gut zu erkennen, dass der Rumpf 6 im Unterschied zur Fig. 4 eine etwas größere Querschnittshöhe 16 aufweist. Beispielsweise beträgt die Querschnittshöhe 16 hier 1,5 mm. Zudem ist die Querschnittshöhe 17 der Flügel 7 größer gestaltet. Die Spannweite 47 der Flügel 7 ist hier so groß wie bei der Speiche nach Fig. 4. Eine solche Speiche 1 kann z. B. bei erhöhten Anforderungen an die Stabilität der Laufräder 100 eingesetzt werden, beispielsweise bei Mountainbikes.

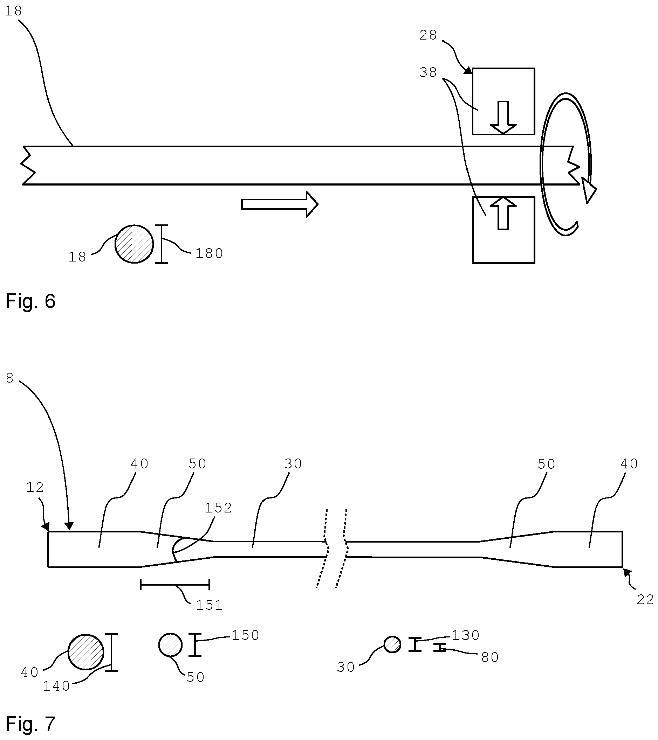

Bei der Herstellung der zuvor beschriebenen Speichen 1 wird zunächst ein Speichenrohling 8 gefertigt. Dieser Schritt wird nachfolgend mit Bezug zu den Figuren 6 bis 8 beschrieben.

Zunächst wird ein (endloser) Drahtwerkstoff 18 durch Kaltschmieden mit einer Schmiedeeinrichtung 28 zu einem Speichenrohling 8 umgeformt. Der Drahtwerkstoff 18 ist zuvor im Wesentlichen zylindrisch und weist beispielsweise einen Durchmesser 180 von etwas mehr als 2 mm und z. b. 2,2 mm oder 2,3 mm auf.

Das Kaltschmieden des Drahtwerkstoffes 18 erfolgt mit einer Schmiedeeinrichtung 28, wie sie in der Figur 6 skizziert ist. Dabei schlagen zwei gegenüberliegend angeordnete Schlagwerkzeuge 38 fortlaufend auf den Drahtwerkstoff 18, während sie dabei um dessen Längsachse rotieren. Zugleich wird der Drahtwerkstoff 18 in seine Längsrichtung und relativ zu den Schlagwerkzeugen 38 vorgeschoben. Durch die Schläge wird der Drahtwerkstoff 18 im Durchmesser im Durchmesser 180 reduziert. Dabei kann der reduzierte Durchmesser dadurch eingestellt werden, wie weit bzw. tief die Schlagwerkzeuge 38 auf den Drahtwerkstoff 18 einwirken.

Nach dem Kaltschmieden mit der Schmiedeeinrichtung 28 wird der Drahtwerkstoff 18 auf die gewünschte Länge abgetrennt, sodass der in der Figur 7 dargestellte Speichenrohling 8 vorliegt.

Der Speichenrohling 8 umfasst hier eine Vorstufe 30 für den Zentralabschnitt 3 und zwei Vorstufen 40 für die Endabschnitte 4 sowie zwei Vorstufen 50 für die Übergangsabschnitte 5. Dabei wurden die Vorstufen 30, 40 für den Zentralabschnitt 3 und für die Endabschnitte 40 zylindrisch geschmiedet. Die Vorstufe 30 des Zentralabschnitts 3 wurde stärker reduziert als die Vorstufen 40 der Endabschnitte 4.

Beispielsweise beträgt der Durchmesser 130 der Vorstufe 30 des Zentralabschnitts 3 hier 1,57 mm + 0,03 mm - 0 mm. Der Durchmesser 140 der Vorstufen 40 der Endabschnitte 4 beträgt hier beispielsweise 2 mm + 0,02 mm - 0 mm. Aus einem solchen Speichenrohling 8 kann z. B. besonders gut eine Speiche 1 geschmiedet werden, wie sie mit Bezug zur Fig. 4 beschrieben ist.

In einem anderen, ebenfalls vorteilhaften Beispiel beträgt der Durchmesser 130 der Vorstufe 30 des Zentralabschnitts 3 hier 1,75 mm + 0,03 mm - 0 mm. Der Durchmesser 140 der Vorstufen 40 der Endabschnitte 4 beträgt beispielsweise 2 mm + 0,02 mm - 0 mm. Aus einem solchen Speichenrohling 8 kann z. B. besonders gut eine Speiche 1 geschmiedet werden, wie sie mit Bezug zur Fig. 4a beschrieben ist.

Der nachfolgend beschriebene Speichenrohling 8 und auch dessen Bearbeitung eignen sich z. B. besonders vorteilhaft für die Herstellung der Speichen 1 nach Figur 4 und Figur 4a.

Die Vorstufen 50 der Übergangsabschnitte 5 wurden hier kegelförmig geschmiedet. Dadurch überbrücken die Vorstufen 50 die unterschiedlichen Durchmesser 130, 140 der benachbarten Vorstufen 30, 40. Durch die kegelförmige Ausgestaltung nimmt der Durchmesser 150 der Vorstufe 50 des Übergangsabschnitts 5 hier in Richtung der Vorstufe 30 des Zentralabschnitts 3 ab.

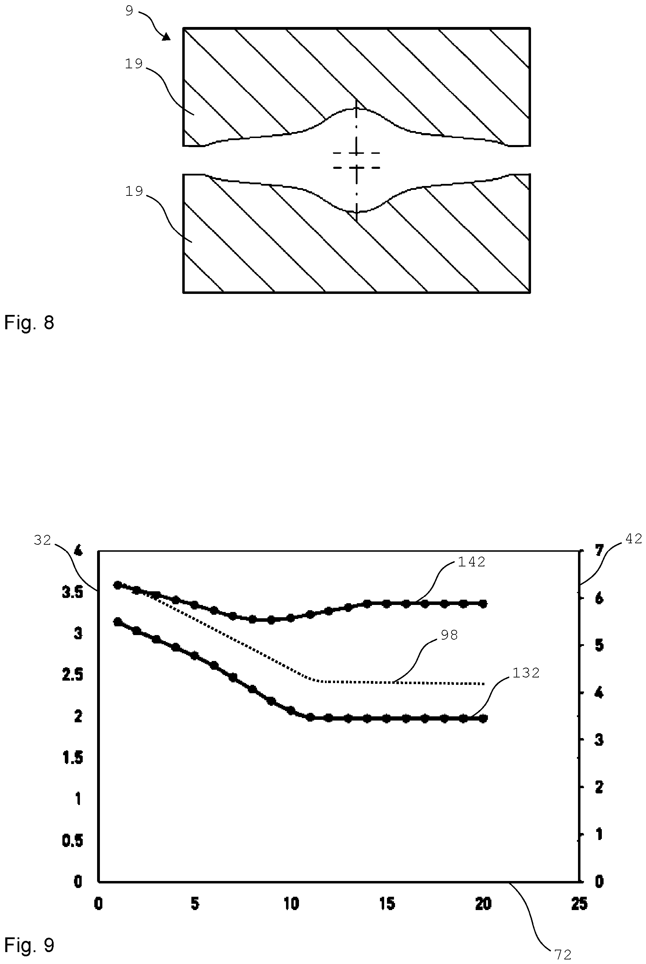

Anschließend wird der Speichenrohling 8 in ein Formwerkzeug 9 eingelegt, wie es in der Figur 8 dargestellt ist. Das Formwerkzeug 9 umfasst hier zwei Werkzeugeinheiten 19, welche zusammen eine Negativform des final vorgesehen Speichenkörpers 2 abbilden. In der quer geschnittenen Darstellung des Formwerkzeugs 9 ist die zukünftige Querschnittsgeometrie des Speichenkörpers 2 mit dem Rumpf 6 und den Flügeln 7 gut zu erkennen.

Dabei dient die Negativform für den Rumpf 6 hier als eine Führung beim Einlegen und insbesondere auch beim Umformen selbst. Durch eine solche Führung lassen sich besonders gerade Speichen 1 herstellen. Auf eine Nachbearbeitung, bei welcher die Speichen 1 gerichtet werden, kann so verzichtet werden.

Der Speichenrohling 8 wird zwischen die Werkzeugeinheiten 19 gelegt. Die Werkzeugeinheiten 19 werden aufeinander zubewegt, sodass der Speichenrohling 8 umgeformt wird. Dabei ist hier auch das Umformen mit dem Formwerkzeug 9 als Kaltschmiede-Prozess ausgebildet. Nach dem Umformen mit dem Formwerkzeug 9 ist der Speichenkörper 2 mit der Geometrie ausgestattet, wie sie zuvor in den Figuren 2 bis 5 beschrieben wurde.

Durch das erste Kaltschmieden entsteht ein Speichenrohling 8 mit einer besonders hohen Zugfestigkeit und Bruchfestigkeit. Durch das anschließende Kaltschmieden des Speichenrohlings 8 erhält die Speiche 1 dann ihre neue bzw. endgültige Querschnittsgeometrie, wodurch hier beispielsweise die aerodynamischen Eigenschaften verbessert werden. Zudem werden die Zugfestigkeit/Bruchfestigkeit durch den anschließenden Kaltschmiedeprozess nochmals erhöht/verbessert.

Allerdings ist eine solche zweistufige Herstellung der Speiche 1 insgesamt nicht unproblematisch, da es besonders durch das zweite Kaltschmieden zu einer unerwünschten Verschlechterung der Zuverlässigkeit der Speiche 1 kommen kann. Beispielsweise könnte der Speichenrohling 8 als Messerspeiche ausgebildet werden, indem er lokal flach gepresst wird. Allerdings konnte in einigen Fällen beobachtet werden, dass solche Messerspeichen eine schlechtere Festigkeit als der eingesetzte Speichenrohling 8 aufweisen können. Daher ist es eine der Aufgaben der hier vorgestellte Erfindung, einer solchen Verschlechterung entgegen zu wirken. Die hier vorgestellte Erfindung bietet eine Möglichkeit, den Speichenrohling 8 durch weiteres Kaltschmieden mit einer neuen Querschnittsgeometrie auszustatten, wobei dessen Festigkeit sogar noch erheblich verbessert wird.

Dabei ist es für die Festigkeit und Zuverlässigkeit der fertigen Speiche 1 besonders entscheidend, wie und an welchen Positionen des Speichenrohlings 8 die neue Querschnittsgeometrie ausgeformt wird. Bei der hier vorgestellten Speiche 1 wird beispielsweise die zylindrische Form der Vorstufen 40 der Endabschnitte 4 abschnittsweise oder sogar vollständig beibehalten. Die zylindrische Vorstufe 30 des Zentralabschnitts 3 wird hingegen durchgehend und gleichmäßig umgeformt. Die Vorstufen 50 der Übergangsabschnitte 5 werden benachbart zu den Vorstufen 40 der Endabschnitte 4 nur leicht und in Richtung der Vorstufe 30 des Zentralabschnitts 3 zunehmend stärker umgeformt.

Dabei sind besonders die Vorstufen 50 der Übergangsabschnitte 5 und das Formwerkzeug 9 hier so aufeinander abgestimmt, dass die Stärke der Umformung im Prinzip dem abnehmenden Durchmesser der Vorstufen 50 der Übergangsabschnitte 5 folgt. Das ist beispielsweise besonders gut in der Figur 5 zu erkennen. Dort ist der Endabschnitt 4 noch zylindrisch ausgebildet, während im Übergangsabschnitt 5 die Spannweite 47 der Flügel 7 in Richtung des Zentralabschnitts 3 in dem Maße zunimmt, wie zuvor der Durchmesser 150 der kegelförmigen Vorstufe 50 des Übergangsabschnitts 5 in Richtung des Zentralabschnitts 3 abgenommen hat. Somit ergibt sich hier ein besonders optimierter Übergang zwischen der neuen Geometrie des Speichenkörpers 2 zu der ursprünglichen Geometrie des Speichenrohlings 8, wodurch ungünstige Spannungsspitzen auch bei hoher Belastung vermieden werden und ein gleichmäßiger Kräfteverlauf gewährleistet werden kann.

Zudem wird hier berücksichtigt, dass die Länge 151 der Vorstufen 50 der Übergangsabschnitte 5 einen besonderen Einfluss auf die Eigenschaften der Speiche 1 nach dem zweiten Kaltschmieden hat. Daher werden die Vorstufen 50 der Übergangsabschnitte 5 hier mit einer Länge 151 (siehe Figur 7) geschmiedet, welche um maximal ein Fünftel von einer jeweiligen vorgesehenen Länge 25 (siehe Fig. 2 und 3) der fertigen Übergangsabschnitte 5 abweicht.

In dem hier gezeigten Beispiel beträgt die Länge 151 der Vorstufen 50 9 mm +/- 1 mm. Die Länge 25 der fertigen Übergangsabschnitte 5 beträgt hier beispielsweise 9 mm. Diese Dimensionen bieten eine optimale Abstimmung des Speichenrohlings 8 an den zweiten Kaltschmiede-Prozess und besonders an die Negativform des Formwerkzeugs 9. Dadurch können durch das zweite Kaltschmieden die aerodynamischen Eigenschaften der Speiche 1 verbessert werden, ohne dass die Festigkeit gegenüber dem Speichenrohling 8 verschlechtert wird.

Zudem ist hier vorteilhaft, dass die Vorstufen 50 der Übergangsabschnitte 5 hier jeweils einen Kegelwinkel 152 (siehe Figur 7; Öffnungswinkel des Kegels) von maximal 11° aufweisen. Bei dem hier gezeigten Speichenrohling 8 beträgt der Kegelwinkel 152 beispielsweise 6,3°. Durch einen solchen Kegelwinkel 152 kann der Speichenrohling 8 mit einer besonders guten Toleranz für die Länge 151 der Vorstufe 50 und zugleich mit einer wirtschaftlichen Vorschubgeschwindigkeit für den Drahtwerkstoff 18 gefertigt werden.

Um vorteilhaften Eigenschaften des geschmiedeten Speichenrohlings 8 auch nach dem zweiten Umformen beibehalten zu können, wird hier zudem die neue Querschnittsgeometrie des Speichenkörpers 2 optimal an die Geometrie des Speichenrohlings 8 und insbesondere an die kegelförmige Geometrie der Vorstufe 50 des Übergangsabschnitts 5 angepasst. Dazu wird der Speichenkörper 2 hier so geformt, dass ein minimaler Durchmesser 13 des Zentralabschnitts 3 geringer ist als ein minimaler Durchmesser 14 der Endabschnitte 4. Zudem sind die Übergangsabschnitte 5 des fertigen Speichenkörpers 2 so geformt, dass sie jeweils einen in Richtung des Zentralabschnitts 3 abnehmenden minimalen Durchmesser 15 aufweisen. Dadurch ist es möglich, den Speichenkörper 2 mit einer neuen Geometrie auszustatten, ohne die ursprüngliche Festigkeit und Form des Speichenrohlings 8 nicht ungünstig zu verändern.

Eine besonders vorteilhafte Möglichkeit, die Geometrie des fertigen Speichenkörpers 2 in Übereinstimmung mit dem Speichenrohling 8 zu bringen, bietet auch die hier gezeigte Querschnittsgeometrie mit dem Rumpf 6 und den Flügeln 7. Dadurch ergeben sich die in der Figur 12 dargestellten Zusammenhänge von Querschnittsfläche 32 und Querschnittsumfang 42.

Im Schaubild der Figur 9 wurden die Querschnittsfläche 32 und die Umfangslänge 42 des in der Figur 5 gezeigten Speichenkörpers 2 über seine Länge an mehreren Bezugspunkten 72 aufgetragen. Zur besseren Veranschaulichung sind die Bezugspunkte 72 auch in der Figur 5 dargestellt. Zudem sind die Bezugspunkte in der Figur 5 als Querschnitte dargestellt, so das die jeweilige Querschnittsgeometrie entlang der Längsachse dort besonders gut zu erkennen ist.

In dem Schaubild der Fig. 9 ist der Verlauf 132 der Querschnittsfläche des Speichenkörpers 2 aufgetragen. Zudem ist der Verlauf 142 der Umfangslänge 42 des Speichenkörpers 2 aufgetragen. Der Verlauf 98 der Umfangslänge 42 der Vorstufen 30, 40, 50 des Speichenrohlings 8, aus dem der Speichenkörper 2 der Figur 5 geformt wurde, ist hier gestrichelt eingezeichnet. Da die Querschnittsfläche 32 beim Umformen des Speichenrohlings 8 zum Speichenkörper 2 nur unwesentlich verändert wurde, entspricht der Verlauf 132 in einer sehr guten Annäherung auch dem Verlauf der Querschnittsfläche 32 des Speichenrohlings 8.

Es ist gut zu erkennen, dass der Speichenrohling 8 ursprünglich einen Verlauf 98 der Umfangslänge 42 hatte, welcher im Wesentlichen proportional zum Verlauf 132 der Querschnittsfläche 32 ist. Gut zu erkennen ist auch, dass durch die Umformung des Speichenrohlings 8 mit dem Formwerkzeug 9 ein Speichenkörper 2 entstanden ist, welcher eine erheblich größere Umfangslänge 42 als der Speichenrohling 8 aufweist. Dabei nimmt die Umfangslänge 42 zunächst weniger stark als die Querschnittsfläche 32 und die Umfangslänge 42 des Speichenrohlings 8 ab. Anschließend nimmt die Umfangslänge 42 innerhalb des Übergangsabschnitts 5 wieder zu und steigt an, bis sie innerhalb des Zentralabschnitts 3 im Wesentlichen konstant bleibt.

Durch eine solche optimierte Anpassung von Querschnittsfläche 32 und Umfangslänge 42 im Bereich der Übergangsabschnitte 5 wird erreicht, dass durch das Umformen des Speichenrohlings 8 keine unerwünschte Schwächung der Speiche 1 auftritt. Ein besonderer Vorteil ist dabei, dass die Umfangslänge 42 bereits in den Übergangsabschnitten 5 gezielt angepasst wird, während die Querschnittsfläche 32 im Vergleich zu der Vorstufe 50 des Übergangsabschnitts 5 im Wesentlichen erhalten bleibt.

Die hier vorgestellte Erfindung bietet insbesondere optimierte Vorstufen 50 der Übergangsabschnitte 5 sowie eine besonders ideale Übereinstimmung des geschmiedeten Speichenrohlings 8 mit der Negativform des Formwerkzeugs 9 zur Ausformung des endgültigen Speichenkörpers 2. Zudem können mit dem hier vorgestellten Verfahren diese Vorteile besonders unaufwendig und wirtschaftlich umgesetzt werden. Einen weiteren Vorteil bietet die Erfindung mit der gezielten Ausformung von Rumpf 6 und Flügeln 7 aus einem zuvor an diese Querschnittsform optimal angepassten Speichenrohling 8. Durch die Ausformung von Rumpf 6 und Flügel 7 ergibt sich eine besonders vorteilhafte Kombination aus einem kreisrunden und einem flachen Speichenquerschnitt, wodurch besonders hohe Festigkeitswerte und besonders hohe Bruchdehnungswerte bei einem minimalen Gewicht der Speiche 1 erreicht werden können. Durch eine solche gezielte Ausformung der Querschnittsgeometrie konnte die Bruchkraft im Vergleich zum Speichenrohling 8 bzw. zu einer herkömmlichen Doppeldickend-Speiche erheblich erhöht werden.

Die hier beschriebene Dimensionierung des Speichenrohlings 8 in Kombination mit dem hier vorgestellten Schlagwerkzeug 38 ermöglicht eine besonders unaufwendige Herstellung von besonders präzisen und insbesondere idealsymmetrischen Übergängen im Rahmen der Herstellung des Speichenrohlings 8. Dadurch ergibt sich zugleich auch eine erheblich bessere Abstimmung des Speichenrohlings 8 mit dem Formwerkzeug für die weitere Umformung.

Es konnte in Zugversuchen aufgezeigt werden, dass eine optimierte Zusammenstellung aus hoher Zugfestigkeit und hoher Dehngrenze erreicht wird. Zudem konnte in Zugversuchen gezeigt werden, dass die Bruchstellen nicht mehr oder nur noch selten in den Übergangsabschnitten 5 liegen und dass die Bruchkraft insgesamt erhöht werden konnte. Des Weiteren konnte durch die Erfindung die Ausschussrate bei der Speichenherstellung erheblich reduziert werden.

### Bezugszeichenliste:

| | | | |
|---|---|---|---|
| 1 | Speiche | 100 | Laufrad |
| 2 | Speichenkörper | 101 | Fahrrad |
| 3 | Zentralabschnitt | 102 | Nabe |
| 4 | Endabschnitt | 103 | Felge |
| 5 | Übergangsabschnitt | 104 | Rahmen |
| 6 | Rumpf | 105 | Gabel |
| 7 | Flügel | 106 | Sattel |
| 8 | Speichenrohling | 107 | Lenker |
| 9 | Formwerkzeug | 130 | Durchmesser |
| 12 | Ende | 132 | Verlauf |
| 13 | Durchmesser | 140 | Durchmesser |
| 14 | Durchmesser | 142 | Verlauf |
| 15 | Durchmesser | 150 | Durchmesser |
| 16 | Querschnittshöhe | 151 | Länge |
| 17 | Querschnittshöhe | 152 | Kegelwinkel |
| 18 | Drahtwerkstoff | 180 | Durchmesser |
| 19 | Werkzeugeinheit | 182 | Wendestelle |
| 22 | Ende | | |
| 25 | Länge | | |
| 27 | Querseiten | | |
| 28 | Schmiedeeinrichtung | | |
| 30 | Vorstufe | | |
| 32 | Querschnittsfläche | | |
| 37 | Hauptseiten | | |
| 38 | Schlagwerkzeug | | |
| 40 | Vorstufe | | |
| 42 | Querschnittsumfang | | |
| 47 | Spannweite | | |
| 50 | Vorstufe | | |
| 52 | Speichenkopf | | |
| 62 | Gewinde | | |
| 72 | Bezugspunkt | | |
| 80 | Radius | | |
| 82 | Verlauf | | |
| 98 | Verlauf | | |

## Patentansprüche

1. Verfahren zur Herstellung einer Speiche (1) für ein Laufrad (100) eines wenigstens teilweise muskelbetriebenen Fahrrades (101) mit einem Speichenkörper (2), wobei der Speichenkörper (2) in der bestimmungsgemäßen Einbauposition in einem Laufrad (100) ein nabenseitiges erstes Ende (22) und ein felgenseitiges zweites Ende (12) aufweist und wobei der Speichenkörper (2) wenigstens einen sich zwischen den Enden (12, 22) erstreckenden Zentralabschnitt (3) aufweist, wobei den Enden (12, 22) jeweils ein Endabschnitt (4) zugeordnet ist und wobei zwischen dem Zentralabschnitt (3) und den Endabschnitten (4) jeweils ein Übergangsabschnitt (5) angeordnet ist,
umfassend die folgenden Verfahrensschritte:
Umformen eines Drahtwerkstoffs (18) zu einem Speichenrohling (8) mit einer Schmiedeeinrichtung (28),
wobei der Speichenrohling (8) Vorstufen (30, 40, 50) des Zentralabschnitts (3) und der Endabschnitte (4) und der Übergangsabschnitte (5) aufweist und wobei die Vorstufen (30, 40) des Zentralabschnitts (3) und der Endabschnitte (4) zylindrisch geschmiedet werden, sodass die Vorstufe (30) des Zentralabschnitts (3) einen geringeren Durchmesser (130) als die Vorstufen (40) der Endabschnitte (4) aufweist und wobei die Vorstufen (50) der Übergangsabschnitte (5) kegelförmig geschmiedet werden, sodass sie einen in Richtung des Zentralabschnitts (3) abnehmenden Durchmesser (150) aufweisen,
**dadurch gekennzeichnet,**
**dass** die Vorstufen (50) der Übergangsabschnitte (5) mit jeweils einer Länge (151) gefertigt werden, welche sich um maximal ein Viertel von einer jeweiligen Länge (25) der Übergangsabschnitte (5) unterscheidet;
und **gekennzeichnet durch** die Verfahrensschritte:
Einlegen des Speichenrohlings (8) in ein Formwerkzeug (9), welches eine Negativform des Speichenkörpers (2) abbildet; Umformen des Speichenrohlings (8) mit dem Formwerkzeug (9), wobei wenigstens die Übergangsabschnitte (5) und der Zentralabschnitt (3) jeweils eine andere Querschnittsgeometrie als ihre Vorstufen (30, 50) erhalten.

2. Verfahren nach dem vorhergehenden Anspruch, wobei ein minimaler Durchmesser (13) des Zentralabschnitts (3) geringer ist als ein minimaler Durchmesser (14) der Endabschnitte (4) und wobei die Übergangsabschnitte (5) jeweils einen in Richtung des Zentralabschnitts (3) abnehmenden minimalen Durchmesser (15) aufweisen.

3. Verfahren nach einem der vorhergehenden Ansprüche, wobei die Vorstufen (50) der Übergangsabschnitte (5) jeweils einen Kegelwinkel (152) von maximal 11° aufweisen.

4. Verfahren nach einem der vorhergehenden Ansprüche, wobei die Übergangsabschnitte (5) durch das Umformen mit dem Formwerkzeug (9) jeweils einen in Richtung des Zentralabschnitts (3) abnehmenden minimalen Durchmesser (15) erhalten und wobei die Abnahme des minimalen Durchmessers (15) mit dem jeweiligen Durchmesser (150) der Vorstufen (50) der Übergangsabschnitte (5) korrespondiert.

5. Verfahren nach einem der vorhergehenden Ansprüche, wobei die Vorstufen (50) der Übergangsabschnitte (5) mit einer Länge (151) gefertigt werden, welche wenigstens das Vierzehnfache eines Differenzbetrags zwischen dem Durchmesser (130) der Vorstufe (30) des Zentralabschnitts (3) und dem Durchmesser (140) der Vorstufen (40) der Endabschnitte (4) beträgt.

6. Verfahren nach einem der vorhergehenden Ansprüche, wobei die Übergangsabschnitte (5) jeweils eine Länge (25) aufweisen, welche wenigstens das Fünffache des minimalen Durchmessers (13) des Zentralabschnitts (3) beträgt.

7. Verfahren nach einem der vorhergehenden Ansprüche, wobei eine Durchmesserdifferenz zwischen dem Durchmesser (130) der Vorstufe (30) des Zentralabschnitts (3) und den jeweiligen Durchmessern (140) der Vorstufen (40) der Endabschnitte (4) zwischen 0,4 mm und 0,8 mm beträgt und wobei die Vorstufen (50) der Übergangsabschnitte (5) diese Durchmesserdifferenz überbrücken.

8. Verfahren nach einem der vorhergehenden Ansprüche, wobei durch das Umformen des Speichenrohlings (8) mit dem Formwerkzeug (9) wenigstens die Vorstufen (50) der Übergangsabschnitte (5) und die Vorstufe (30) des Zentralabschnitts (3) derart umgeformt werden, dass deren Querschnittsumfang (42) jeweils stärker verändert wird als deren Querschnittsfläche (32).

9. Verfahren nach einem der vorhergehenden Ansprüche, wobei der Speichenrohling (8) mit dem Formwerkzeug (9) derart umgeformt wird, dass wenigstens der Zentralabschnitt (3) einen größeren Querschnittsumfang (42) als seine Vorstufe (30) erhält und/oder dass wenigstens die Übergangsabschnitte (5) jeweils einen größeren Querschnittsumfang (42) als ihre Vorstufen (50) erhalten.

10. Verfahren nach einem der vorhergehenden Ansprüche, wobei in den Übergangsabschnitten (5) eine Querschnittsfläche (32) des Speichenkörpers (2) in Richtung des Zentralabschnitts (3) abnimmt, während dort zugleich eine Umfangslänge (42) des Querschnitts des Speichenkörpers (2) entweder um ein geringeres Maß als die Querschnittsfläche (32) abnimmt oder sogar zunimmt.

11. Verfahren nach einem der vorhergehenden Ansprüche, wobei der Speichenrohling (8) mit dem Formwerkzeug (9) derart umgeformt wird, dass der Speichenkörper (2) wenigstens in den Übergangsabschnitten (5) wenigstens abschnittsweise einen Rumpf (6) und zwei Flügel (7) aufweist, wobei sich die Flügel (7) an gegenüberliegenden Längsseiten des Rumpfes (6) erstrecken.

12. Verfahren nach dem vorhergehenden Anspruch, wobei eine Spannweite (47) der Flügel (7) wenigstens dort zunehmend ausgebildet wird, wo die Durchmesser (150) der Vorstufen (50) der Übergangsabschnitte (5) zuvor abnehmend ausgebildet wurden und wobei eine Spannweite (47) der Flügel (7) in wenigstens einem der Übergangsabschnitte (5) in Richtung des Zentralabschnitts (3) zunimmt.

13. Verfahren nach einem der beiden vorhergehenden Ansprüche, wobei die Flügel (7) und/oder der Rumpf (6) in wenigstens einem der Übergangsabschnitte (5) eine veränderliche Querschnittsgeometrie aufweisen.

14. Verfahren nach einem der drei vorhergehenden Ansprüche, wobei eine Querschnittshöhe (17) der Flügel (7) in wenigstens einem der Übergangsabschnitte (5) in Richtung des Zentralabschnitts (3) abnimmt und/oder wobei eine Querschnittshöhe (16) des Rumpfes (6) in wenigstens einem der Übergangsabschnitte (5) in Richtung des Zentralabschnitts (3) abnimmt.

15. Speiche (1) für ein Laufrad (100) eines wenigstens teilweise muskelbetriebenen Fahrrades (101) mit einem Speichenkörper (2), wobei der Speichenkörper (2) in der bestimmungsgemäßen Einbauposition in dem Laufrad (100) ein nabenseitiges erstes Ende (22) und ein felgenseitiges zweites Ende (12) aufweist und wobei der Speichenkörper (2) wenigstens einen sich zwischen den Enden (12, 22) erstreckenden Zentralabschnitt (3) aufweist,
wobei den Enden (12, 22) jeweils ein Endabschnitt (4) zugeordnet ist und wobei ein minimaler Durchmesser (13) des Zentralabschnitts (3) geringer ist als ein minimaler Durchmesser (14) der Endabschnitte (4),
wobei zwischen dem Zentralabschnitt (3) und den Endabschnitten (4) jeweils ein Übergangsabschnitt (5) angeordnet ist und wobei der Übergangsabschnitt (5) einen in Richtung des Zentralabschnitts (3) abnehmenden minimalen Durchmesser (15) aufweist,
wobei der Speichenkörper (2) wenigstens in den Übergangsabschnitten (3) wenigstens abschnittsweise einen Rumpf (6) und zwei Flügel (7) aufweist, wobei sich die Flügel (7) an gegenüberliegenden Längsseiten des Rumpfes (6) erstrecken,
**dadurch gekennzeichnet,**
**dass** die Übergangsabschnitte (5) jeweils eine Länge (25) aufweisen, welche wenigstens das Vierfache des minimalen Durchmessers (13) des Zentralabschnitts (3) und/oder wenigstens das 3,5-fache des minimalen Durchmessers der Endabschnitte (4) beträgt und dass eine Spannweite (47) der Flügel (7) in wenigstens einem der Übergangsabschnitte (5) in Richtung des Zentralabschnitts (3) zunimmt.

## Claims

1. Method of manufacturing a spoke (1) for a wheel (100) of an at least partially muscle-powered bicycle (101), having a spoke body (2), wherein the spoke body (2) in the installed position as intended in a wheel (100), comprises a hub-side, first end (22) and a rim-side, second end (12), and wherein the spoke body (2) comprises at least one central section (3) extending between the ends (12, 22), wherein one end portion (4) is attributed to each of the ends (12, 22), and wherein one transition section (5) each is disposed between the central section (3) and the end portions (4),
comprising the following process steps:
reshaping a wire material (18) to obtain a spoke blank (8) by means of a forging device (28), wherein the spoke blank (8) includes pre-stages (30, 40, 50) of the central section (3) and the end portions (4) and the transition sections (5), and
wherein the pre-stages (30, 40) of the central section (3) and of the end portions (4) are forged cylindrically, so that the pre-stage (30) of the central section (3) shows a smaller diameter (130) than do the pre-stages (40) of the end portions (4), and wherein the pre-stages (50) of the transition sections (5) are forged conically, so that they show a diameter (150) decreasing in the direction of the central section (3),
**characterized in**
**that** the pre-stages (50) of the transition sections (5) are each manufactured in a length (151) which differs by a maximum of one fourth from the pertaining length (25) of the transition sections (5),
and **characterized by** the process steps:
inserting the spoke blank (8) in a shaping tool (9), which reproduces a negative mold of the spoke body (2), reshaping the spoke blank (8) by means of the shaping tool (9), wherein at least the transition sections (5) and the central section (3) are each provided with a cross-sectional geometry different from their pre-stages (30, 50).

2. The method according to the preceding claim, wherein the minimal diameter (13) of the central section (3) is smaller than the minimal diameter (14) of the end portions (4), and wherein the transition sections (5) each show a minimal diameter (15) decreasing in the direction of the central section (3).

3. The method according to any of the preceding claims, wherein the pre-stages (50) of the transition sections (5) each show a cone angle (152) of maximally 11°.

4. The method according to any of the preceding claims, wherein due to the reshaping by means of the shaping tool (9), the transition sections (5) are each provided with a minimal diameter (15) decreasing in the direction of the central section (3), and wherein the decrease of the minimal diameter (15) corresponds to the pertaining diameters (150) of the pre-stages (50) of the transition sections (5).

5. The method according to any of the preceding claims, wherein the pre-stages (50) of the transition sections (5) are manufactured in a length (151) which is at least 14 times the differential amount between the diameter (130) of the pre-stage (30) of the central section (3) and the diameter (140) of the pre-stages (40) of the end portions (4).

6. The method according to any of the preceding claims, wherein the transition sections (5) each show a length (25) which is at least five times the minimal diameter (13) of the central section (3).

7. The method according to any of the preceding claims, wherein the difference in diameters between the diameter (130) of the pre-stage (30) of the central section (3) and the pertaining diameters (140) of the pre-stages (40) of the end portions (4) is between 0.4 mm and 0.8 mm, and wherein the pre-stages (50) of the transition sections (5) bridge this difference in diameters.

8. The method according to any of the preceding claims, wherein the reshaping of the spoke blank (8) by means of the shaping tool (9) reshapes at least the pre-stages (50) of the transition sections (5) and the pre-stage (30) of the central section (3), such that their cross sectional circumferences (42) are each modified to a greater extent than is their cross sectional area (32).

9. The method according to any of the preceding claims, wherein the spoke blank (8) is reshaped by means of the shaping tool (9), such that at least the central section (3) is provided with a larger cross sectional circumference (42) than its pre-stage (30), and/or that at least the transition sections (5) are each provided with a larger cross sectional circumference (42) than their pre-stages (50).

10. The method according to any of the preceding claims, wherein in the transition sections (5), the cross sectional area (32) of the spoke body (2) decreases in the direction of the central section (3), while at the same time the circumferential length (42) of the cross section of the spoke body (2) either decreases by a smaller measure than does the cross sectional area (32), or even increases.

11. The method according to any of the preceding claims, wherein the spoke blank (8) is reshaped by means of the shaping tool (9), such that the spoke body (2) has a body (6) and two wings (7) at least in the transition sections (5), at least in sections, wherein the wings (7) extend on opposite longitudinal faces of the body (6).

12. The method according to the preceding claim, wherein the span (47) of the wings (7) is configured increasing at least where the diameters (150) of the pre-stages (50) of the transition sections (5) had previously been configured decreasing, and wherein the span (47) of the wings (7) increases in the direction of the central section (3) at least in one of the transition sections (5).

13. The method according to any of the two preceding claims, wherein the wings (7) and/or the body (6) show a variable cross-sectional geometry in at least one of the transition sections (5).

14. The method according to any of the three preceding claims,
wherein the section height (17) of the wings (7) decreases in the direction of the central section (3) at least in one of the transition sections (5), and/or wherein the section height (16) of the body (6) decreases in the direction of the central section (3) at least in one of the transition sections (5).

15. A spoke (1) for a wheel (100) of an at least partially muscle-powered bicycle (101) having a spoke body (2), wherein the spoke body (2), in the installed position in the wheel (100) as intended, comprises a hub-side, first end (22) and a rim-side, second end (12),
and wherein the spoke body (2) comprises at least one central section (3) extending between the ends (12, 22),
wherein one end portion (4) each is attributed to the ends (12, 22), and wherein the minimal diameter (13) of the central section (3) is smaller than the minimal diameter (14) of the end portions (4),
wherein one transition section (5) each is disposed between the central section (3) and the end portions (4), and wherein the transition section (5) shows a minimal diameter (15) decreasing in the direction of the central section (3),
wherein the spoke body (2) has a body (6) and two wings (7) at least in the transition sections (3), at least in sections, wherein the wings (7) extend on opposite longitudinal faces of the body (6),
**characterized in**
**that** the transition sections (5) each show a length (25) that is at least 4 times the minimal diameter (13) of the central section (3), and/or at least 3.5 times the minimal diameter of the end portions (4), and that the span (47) of the wings (7) increases in the direction of the central section (3) in at least one of the transition sections (5).

## Revendications

1. Procédé de fabrication d'un rayon (1) pour une roue (100) d'une bicyclette (101) entraînée au moins partiellement par force musculaire, doté d'un corps de rayon (2), ledit corps de rayon (2) présentant, dans la position de montage prévue dans une roue (100), une première extrémité (12) côté moyeu et une deuxième extrémité (22) côté jante, et ledit corps de rayon (2) présentant au moins une partie centrale (3) s'étendant entre les extrémités (12, 22), une section d'extrémité (4) étant associée à chacune des extrémités (12, 22) et une section de transition (5) étant agencée entre la section centrale (3) et chacune des sections d'extrémité (4), comprenant les étapes de procédé suivantes :
transformation d'un matériau en fil (18) en une ébauche de rayon (8) avec un dispositif de forgeage (28),
ladite ébauche de rayon (8) présentant des étapes préliminaires (30, 40, 50) de la section centrale (3) et des sections d'extrémité (4) et de la section de transition (5), et lesdites étapes préliminaires (30, 40) de la section centrale (3) et des étapes d'extrémité (4) étant forgées de forme cylindrique, de sorte que l'étape préliminaire (30) de la section centrale (3) présente un diamètre (130) inférieur à celui des étapes préliminaires (40) des sections d'extrémité (4), et les étapes préliminaires (50) des sections de transition (5) étant forgées de forme conique de sorte qu'elles présentent un diamètre (150) diminuant en direction de la section centrale (3), et les étapes préliminaires (50) des sections de transition (5) étant réalisées chacune avec une longueur (151) qui diffère au maximum d'un quart d'une longueur respective (25) des sections de transition (5) ;
insertion de l'ébauche de rayon (8) dans un outil de formage (9) qui reproduit une forme négative du corps de rayon (2) ;
transformation de l'ébauche de rayon (8) à l'aide de l'outil de formage (9), au moins les sections de transition (5) et la section centrale (3) recevant chacune une autre géométrie de section droite que celle de leur étape préliminaire (30, 50).

2. Procédé selon la revendication précédente, un diamètre (13) minimum de la section centrale (3) étant inférieur à un diamètre (14) minimum des sections d'extrémité (4), et les sections de transition (5) présentant chacune un diamètre (15) minimum décroissant en direction de la section centrale (3) .

3. Procédé selon l'une quelconque des revendications précédentes, les étapes préliminaires (50) des sections de transition (5) présentant chacune un angle de cône (152) de maximum 11°, et de préférence 9° au maximum.

4. Procédé selon l'une quelconque des revendications précédentes, les sections de transition (5) recevant chacune par la transformation à l'aide de l'outil de formage (9), un diamètre (15) minimum décroissant en direction de la section centrale (3), et cette diminution du diamètre minimum (15) correspondant au diamètre (150) des étapes préliminaires (50) des sections de transition (5), et notamment à leur angle de cône (152).

5. Procédé selon l'une quelconque des revendications précédentes, les étapes préliminaires (50) des sections de transition (5) étant fabriquées avec une longueur (151) qui est égale à quatorze fois la différence entre le diamètre (130) de l'étape préliminaire (30) de la section centrale (3) et le diamètre (140) des étapes préliminaires (40) des sections d'extrémité (4), et les étapes préliminaires (50) des sections de transition (5) présentant chacune de préférence une longueur d'au moins 7 mm.

6. Procédé selon l'une quelconque des revendications précédentes, les sections de transition (5) présentant chacune une longueur (25) qui est égale à au moins cinq fois, et de préférence à au moins six fois le diamètre (13) minimum de la section centrale (3).

7. Procédé selon l'une quelconque des revendications précédentes, une différence de diamètre entre le diamètre (130) de l'étape préliminaire (30) de la section centrale (3) et chacun des diamètres (140) des étapes préliminaires (40) des sections d'extrémité (4) étant comprise entre 0,4 mm et 0,8 mm, et les étapes préliminaires (50) des sections de transition (5) couvrant cette différence de diamètre.

8. Procédé notamment selon l'une quelconque des revendications précédentes, par la transformation de l'ébauche de rayon (8) à l'aide de l'outil de formage (9), au moins les étapes préliminaires (50) des sections de transition (5) et l'étape préliminaire (30) de la section centrale (3) étant transformée de sorte que leurs circonférences de section (42) sont chacune modifiées plus fortement que leurs surfaces de section (32).

9. Procédé notamment selon l'une quelconque des revendications précédentes, l'ébauche de rayon (8) étant transformée à l'aide de l'outil de formage (9) de sorte qu'au moins la section centrale (3) reçoit une circonférence de section (42) supérieure à celle de son étape préliminaire (30), et/ou qu'au moins les sections de transition (5) reçoivent une circonférence de section (42) supérieure à celle de leurs étapes préliminaires (50).

10. Procédé notamment selon l'une quelconque des revendications précédentes, dans les sections de transition (5) une surface de section (32) du corps de rayon (2) diminuant en direction de la section centrale (3), tandis qu'une longueur de circonférence (42) de la section droite du corps de rayon (2) y diminue en même temps de moindre mesure qu'une surface de section droite (32), voire y augmente même.

11. Procédé notamment selon l'une quelconque des revendications précédentes, l'ébauche de rayon (8) étant transformée à l'aide de l'outil de formage (9) de sorte que le corps de rayon (2) présente au moins dans les sections de transition (5) au moins par sections un tronc (6) et deux ailes (7), lesdites ailes (7) s'étendant sur des côtés longitudinaux opposés du tronc (6).

12. Procédé selon la revendication précédente, une envergure (47) des ailes (7) y étant réalisée de manière croissante au moins là où les diamètres (150) des étapes préliminaires (50) des sections de transition (5) étaient précédemment réalisées de manière décroissante, et en particulier une envergure (47) des ailes (7) augmentant dans au moins une des sections de transition (5) en direction de la section centrale (3).

13. Procédé selon l'une quelconque des deux revendications précédentes, les ailes (7) et/ou le tronc (6) présentant dans au moins une des sections de transition (5) une géométrie de section variable.

14. Procédé selon l'une quelconque des trois revendications précédentes, une hauteur de section droite (17) des ailes (7) diminuant dans au moins une des sections de transition (5) en direction de la section centrale (3), et/ou une hauteur de section droite (16) du tronc (6) diminuant dans au moins une des sections de transition (5) en direction de la section centrale (3).

15. Rayon (1), notamment fabriqué selon un procédé selon l'une quelconque des revendications précédentes, pour une roue (100) d'une bicyclette (101) entraînée au moins partiellement par force musculaire, doté d'un corps de rayon (2), ledit corps de rayon (2) présentant, dans la position de montage prévue dans la roue (100), une première extrémité (12) côté moyeu et une deuxième extrémité (22) côté jante, et le corps de rayon (2) présentant au moins une section centrale entre les extrémités (12, 22),
une section d'extrémité (4) étant associée à chacune des extrémités (12, 22), et un diamètre (13) minimum de la section centrale (3) étant inférieur à un diamètre minimum (14) des sections d'extrémité (4),
une section de transition (5) étant agencée à chaque fois entre la section centrale (3) et les sections d'extrémité (4), et la section de transition (5) présentant un diamètre (15) minimum décroissant en direction de la section centrale (3),
**caractérisé en ce**
**que** le corps de rayon (2) présente au moins dans les sections de transition (3) au moins partiellement un tronc (6) et deux ailes (7), les ailes (7) s'étendant sur des côtés longitudinaux opposés du tronc (6), et que les sections de transition (5) présentent chacune une longueur (25) qui est égale à au moins quatre fois le diamètre mininum (13) de la section centrale (3), et/ou au moins 3,5 fois le diamètre minimum des sections d'extrémité (4), et qu'une envergure (47) des ailes (7) augmente dans au moins une des sections de transition (5) en direction de la section centrale (3).
